# EUROPÄISCHE PATENTSCHRIFT

(11) **EP 1 008 489 B1**
(45) Veröffentlichungstag und Bekanntmachung des Hinweises auf die Patenterteilung: **02.04.2003**
(21) Anmeldenummer: 99124630.7
(22) Anmeldetag: 10.12.1999
(51) Int. Cl.: B60R 9/045

(54) **Dachlastenträgersystem**
Roof carrier
Porte-bagages de toit

(30) Priorität: 11.12.1998 DE 19857322
(43) Veröffentlichungstag der Anmeldung: 14.06.2000
(73) Patentinhaber: ORIS FAHRZEUGTEILE HANS RIEHLE GmbH, 71696 Möglingen (DE)
(72) Erfinder: Kleb, Emmerich, 71706 Markgröningen (DE); Riehle, Hans, 71638 Ludwigsburg (DE)
(74) Vertreter: Beck, Jürgen, Dr. Dipl.-Phys.

(56) Entgegenhaltungen:
- WO-A-94/10007
- WO-A-98/39177
- US-A- 3 545 660
- US-A- 5 715 980
- PATENT ABSTRACTS OF JAPAN vol. 1997, no. 05, 30. Mai 1997 (1997-05-30) & JP 09 024771 A (OI SEISAKUSHO CO LTD), 28. Januar 1997 (1997-01-28)

## Beschreibung

Die Erfindung betrifft ein Dachlastenträgersystem für Kraftfahrzeuge, umfassend einen Dachträger mit einem, Lasten aufnehmenden Querträger und mit beidseitig des Querträgers angeordneten Haltern, welche Halterfüße mit an diesen angeordneten Fixiereinrichtungen aufweisen, wobei die Halterfüße in fahrzeugseitig angeordnete Aufnahmen einsetzbar, in Längsrichtung der Aufnahmen bewegbar und in diesen Aufnahmen mit den Fixiereinrichtungen fixierbar sind, ein auf einer Seite des Dachträgers angeordnetes Handbedienelement und eine Koppeleinrichtung, welche das Handbedienelement mit den Fixiereinrichtungen so koppelt, daß über das Handbedienelement die Fixiereinrichtungen an beiden Halterfüßen betätigbar sind.

Derartige Dachlastenträgersysteme sind aus der US 5,715,980 oder der FR 2 705 295 A1 bekannt. Bei diesen besteht das Problem, daß ein Fixieren des Dachträgers zwar durch einfache Bedienung möglich ist, die Fixierung selbst jedoch nur eine begrenzte Stabilität bietet.

Der Erfindung liegt daher die Aufgabe zugrunde, ein Dachlastenträgersystem für Kraftfahrzeuge derart zu verbessern, daß dies einfach montierbar und demontierbar, leicht in Längsrichtung der Aufnahmen verschiebbar und in der jeweiligen Position stabil fixierbar ist.

Diese Aufgabe wird bei einem Dachlastenträgersystem der eingangs beschriebenen Art erfindungsgemäß dadurch gelöst, daß an den Halterfüßen derart federnd abgestützte Laufrollen gelagert sind, daß sich die Halterfüße bei außerhalb einer Fixierstellung stehenden Fixiereinrichtungen über die Laufrollen auf einer Auflagefläche der Aufnahmen abstützen und daß die Halterfüße in der Fixierstellung der Fixiereinrichtungen gegenüber den Laufrollen zur Auflagefläche hin verschoben sind.

Der Vorteil der erfindungsgemäßen Lösung ist darin zu sehen, daß durch die federnd abgestützten Rollen die Möglichkeit besteht, den Dachträger in einfacher Weise in Längsrichtung der Aufnahmen zu verschieben, da bei nicht in Fixierstellung stehenden Fixiereinrichtungen die federnde Abstützung der Laufrollen bewirkt, daß die Halterfüße von den Laufrollen getragen werden und somit die Halterfüße die Auflagefläche nicht berühren. Andererseits besteht die Möglichkeit, zum Fixieren der Dachträger mit den Halterfüßen die Halterfüße in Richtung der Auflagefläche zu verschieben und insbesondere durch die Berührung der Halterfüße mit der Auflagefläche eine stabile Abstützung der Halterfüße in den Aufnahmen zu erhalten, ohne daß die Halterfüße hierbei auf den Laufrollen abgestützt sind.

Damit entfällt die Notwendigkeit, die Laufrollen so zu dimensionieren und auszulegen, daß diese in der Fixierstellung die für die Fixierung erforderlichen Kräfte aufnehmen. Vielmehr können die Laufrollen lediglich so ausgelegt und dimensioniert sein, daß sie in der Lage sind, bei nicht in der Fixierstellung stehenden Fixiereinrichtungen die Halterfüße zu tragen und somit in den Aufnahmen leicht verschieblich zu halten.

Der Vorteil der erfindungsgemäßen Lösung ist außerdem darin zu sehen, daß ein Aufsetzen des Dachträgers von einer Seite des Kraftfahrzeugs aus möglich ist und daß bei in den Aufnahmen sitzenden Halterfüßen durch Betätigen des Handbedienelements die Fixiereinrichtungen so betätigbar sind, daß ein Fixieren beider Halterfüße gleichzeitig in den entsprechenden Aufnahmen erfolgt.

Damit ist auch ein ungleiches oder irrtümlicherweise einseitiges Fixieren des Dachträgers verhindert werden kann, da entweder der Dachträger vollständig und sicher mit beiden Haltern fixiert ist oder mit keinem der Halter, so daß auch zu Unfällen führende einseitige Fixierungen der Dachträger vermieden werden können.

Die erfindungsgemäße Lösung erfordert nur auf einer Seite des Dachträgers ein Handbedienelement. Es ist aber auch denkbar, auf beiden Seiten ein Handbedienelement vorzusehen, sofern jedes Handbedienelement mit allen Fixiereinrichtungen gekoppelt ist.

Prinzipiell wäre es möglich, in der Fixierstellung die Halterfüße in den Aufnahmen kraftschlüssig festzulegen.

Um zusätzlich zu der leichten Verschiebbarkeit eine feste Fixierung des Halterfußes in der jeweiligen Aufnahme zu erreichen, ist vorzugsweise vorgesehen, daß der jeweilige Halterfuß in der jeweiligen Aufnahme gegen eine Verschiebung in Längsrichtung der Aufnahme formschlüssig fixierbar ist, das heißt, daß einerseits ein leichtes Bewegen des Halterfußes dann möglich sein soll, wenn die Fixiereinrichtung in der Lösestellung steht, andererseits aber eine formschlüssige Fixierung dann realisierbar sein soll, wenn der Halterfuß in der gewünschten Position steht.

Eine derartige formschlüssige Festlegung des Halterfußes ließe sich beispielsweise dadurch erreichen, daß das Fixierelement in Längsrichtung eine formschlüssige Festlegung des Halterfußes relativ zur Aufnahme bewirkt.

Noch vorteilhafter ist es jedoch, wenn der Halterfuß und die Aufnahme Formschlußelemente aufweisen, die durch Überführen der Fixiereinrichtung in der Fixierstellung in Eingriff bringbar sind, das heißt aber, daß diese Formschlußelemente am Halterfuß selbst und nicht an der Fixiereinrichtung vorgesehen sind und somit unmittelbar eine formschlüssige Verbindung zwischen dem Halterfuß und der Aufnahme herbeiführen, ohne daß die somit von den Formschlußelementen aufzunehmenden Kräfte über die Fixiereinrichtung wirken.

Bei derartigen unmittelbar zwischen dem Halterfuß und der Aufnahme wirksamen Formschlußelementen soll jedoch vermieden werden, daß diese bei Verschieben des Dachträgers relativ zur Aufnahme zur korrekten Positionierung des Dachträgers bezüglich des Fahrzeugs in Eingriff kommen. Aus diesem Grund ist vorzugsweise vorgesehen, daß die Formschlußelemente in Richtung ihrer außer Eingriff stehenden Stellung federbeaufschlagt sind und erst dann in Eingriff kommen, wenn diese gegen die Federwirkung beaufschlagt werden.

Eine besonders vorteilhafte Lösung sieht daher vor, daß beim Überführen der Fixiereinrichtung von der Lösestellung in die Fixierstellung die Fixiereinrichtung der Federbeaufschlagung der Formschlußelemente entgegenwirkt.

Besonders günstig läßt sich dies realisieren, wenn die Federbeaufschlagung der Formschlußelemente durch die federnd abgestützten Laufrollen erfolgt.

Eine konstruktiv besonders günstige Lösung sieht daher vor, daß das am Halterfuß angeordnete Formschlußelement starr mit diesem verbunden ist und daß der Halterfuß gegenüber der Aufnahme durch ein federbeaufschlagtes, an der Aufnahme anliegendes und in dieser verschiebbares Element so beaufschlagt ist, daß das am Halterfuß angeordnete Formschlußelement und das an der Aufnahme angeordnete Formschlußelement ohne eine der Federbeaufschlagung entgegenwirkende Fixiereinrichtung außer Eingriff stehen.

Die Formschlußelemente könnten dabei durch eine Bewegung des Halterfußes in unterschiedlichste Richtungen in Eingriff bringbar sein. Eine besonders günstige Lösung sieht vor, daß die Formschlußelemente durch Beaufschlagen des Halterfußes in Abstützrichtung zu einer Auflagefläche der Aufnahme in Eingriff bringbar sind. Das heißt, daß die Fixiereinrichtung vorzugsweise so auf den Halterfuß wirkt, daß es diesen in der Abstützrichtung noch auf die zur Auflagefläche der Aufnahme hin bewegt.

Um zu erreichen, daß der jeweilige Halterfuß beim Ineingriffbringen der Formschlußelemente in einer Stellung steht, in welcher die Formschlußelemente einander zugewandt stehen und somit exakt miteinander in Eingriff bringbar sind, ist vorgesehen, daß der jeweilige Halterfuß in der Aufnahme vor Ineingriffbringen der Formschlußelemente vorpositionierbar ist.

Ein derartiges Vorpositionieren des Halterfußes läßt sich in unterschiedlichster Art und Weise realisieren. Beispielsweise wäre es möglich, als Vorpositionierung des Halterfußes optische Marken an diesem und/oder der Aufnahme vorzusehen.

Eine vorteilhafte Möglichkeit sieht jedoch vor, daß die Elemente in der Aufnahme an definierten Stellen durch ein leichtes Einrasten vorpositionierbar sind.

Ein derartiges leichtes Einrasten kann beispielsweise durch eine schwache Rastfeder erfolgen, welche lediglich so stark ist, daß sie eine geringfügige Hemmung gegen ein Weiterschieben des Halterfußes relativ zur Aufnahme bewirkt, so daß die Bedienungsperson durch diesen geringen Widerstand gegen das Weiterschieben das Erreichen der definierten Stellung erkennt. Das leichte Einrasten soll jedoch keinesfalls so stark sein, daß die Bedienungsperson Mühe hat, den Halterfuß über die jeweilige definierte Stellung hinwegzubewegen.

Besonders einfach läßt sich dies dann realisieren, wenn die Aufnahme mit Vertiefungen versehen ist, in welche die Elemente zum Vorpositionieren des jeweiligen Halterfußes relativ zur Aufnahme eingreifen.

Im einfachsten Fall sind die Elemente als Laufrollen des Halterfußes ausgebildet, welche somit einerseits ein leichtes Verschieben des Halterfußes in der Aufnahme gewährleisten, andererseits dann aber wenn sie in die Vertiefungen hineinlaufen, der Bedienungsperson einen leichten Widerstand gegen ein Weiterschieben des Halterfußes vermitteln.

Hinsichtlich der Möglichkeit, die Halterfüße in den Aufnahmen zu positionieren wurden bislang im Zusammenhang mit der Erörterung der einzelnen Ausführungsbeispiele keine näheren Angaben gemacht. So sieht ein vorteilhaftes Ausführungsbeispiel vor, daß sich die Aufnahmen in Fahrtrichtung des Kraftfahrzeugs erstrecken und die Halterfüße in den Aufnahmen in Fahrtrichtung verschiebbar sind, um eine variable Positionierung der Dachträger relativ zum Fahrzeug zu ermöglichen.

Besonders vorteilhaft läßt sich die Verschiebbarkeit der Halterfüße dann gestalten, wenn die Halterfüße mit Laufrollen in den Aufnahmen abgestützt sind, so daß durch diese Laufrollen ein sehr leichtgängiges Verschieben der Halterfüße in Fahrtrichtung möglich ist.

Um zusätzlich ein Verkanten der Halterfüße in den Aufnahmen zu verhindern, ist vorzugsweise vorgesehen, daß die Halterfüße mit Querführungsrollen in den Aufnahmen geführt sind, so daß es möglich ist, daß eine Bedienungsperson auf einer Seite des Fahrzeugs stehend den Dachträger relativ zum Fahrzeug an der gewünschten Stelle positionieren kann, ohne ständig auf die andere Seite gehen zu müssen und auf der anderen Seite eine geeignete Positionierung des Halters vornehmen zu müssen.

Mit diesen Maßnahmen ist vorteilhafterweise eine vollständige einseitige Bedienbarkeit des Dachträgers gewährleistet, da der Dachträger von einer auf einer Seite des Fahrzeugs stehenden Bedienungsperson in die Aufnahmen eingesetzt und in diesen in Fahrtrichtung so lange verschoben werden kann, bis die geeignete Position erreicht ist, und dann von dieser Seite aus auch die Möglichkeit besteht, über das Handbedienelement die Fixiereinrichtungen in die Fixierstellung zu überführen.

Alternativ oder ergänzend zu der eingangs beschriebenen erfindungsgemäßen Lösung sieht ein besonders vorteilhaftes erfindungsgemäßes Dachlastenträgersystem vor, daß die Fixiereinrichtungen in eine Verschiebestellung überführbar sind, in welcher der Dachträger in Längsrichtung der Aufnahmen bei in den Aufnahmen gegen ein Herausheben gesicherten Halterfüßen verschiebbar ist.

Dieses vorteilhafte Konzept ermöglicht es somit, einerseits mit der Fixiereinrichtung die Halterfüße in den Aufnahmen festzulegen, andererseits durch die Verschiebestellung der Fixiereinrichtung ein Verschieben der Haltefüße in Längsrichtung der Aufnahmen zu ermöglichen, dabei jedoch die Halterfüße noch gegen ein Herausheben aus den Aufnahmen durch die Fixiereinrichtung gesichert zu halten.

Schließlich ist es besonders vorteilhaft, wenn die Fixiereinrichtungen in eine Lösestellung bringbar sind, in welcher die Haltefüße in die Aufnahmen einführbar oder aus diesen herausnehmbar sind. Eine derartige Lösung hat den großen Vorteil, daß damit noch zusätzlich die Möglichkeit besteht, die Halterfüße aus den Aufnahmen an jeder Stelle derselben zu entnehmen, so daß in den Aufnahmen keinerlei besondere Maßnahmen, wie beispielsweise Ausschnitte, vorgesehen sein müssen, die ein Herausnehmen der Halterfüße aus den Aufnahmen erlauben.

Insbesondere ist es vorteilhaft, wenn die Fixiereinrichtungen einerseits in der Verschiebestellung die Halterfüße in den Aufnahmen fixiert halten und andererseits in der Lösestellung die Möglichkeit schaffen, an jeder Stelle der Aufnahmen die Halterfüße aus diesen zu entnehmen.

Prinzipiell wäre es auch bei der erfindungsgemäßen Lösung denkbar, die Fixiereinrichtungen so auszubilden, daß diese ebenfalls mit Gewinden versehen sind, die eine Vielzahl von Umdrehungen benötigen, wie dies aus dem Stand der Technik bekannt ist.

Da ein Bedienen derartiger Fixiereinrichtungen jedoch selbst über Bedienung durch das Handbedienungselement eine unerwünscht lange Zeitdauer zur Fixierung erforderlich machen würde, ist vorzugsweise vorgesehen, daß jede Fixiereinrichtung ein Fixierelement aufweist, welches mit einem an der Aufnahme vorgesehenen Gegenlager durch eine Bewegung längs einer zum Gegenlager verlaufenden Bahn in Eingriff bringbar ist. Durch die Bewegung des Fixierelements längs einer zum Gegenlager verlaufenden Bahn ist eine Möglichkeit geschaffen, mittels einer begrenzten Bewegung des Handbedienelements ein rasches Fixieren der Haltefüße zu erreichen.

Das Fixierelement könnte dabei längs einer keilähnlich verlaufenden Schräge bewegbar sein. Eine besonders vorteilhafte Lösung sieht vor, daß das Fixierelement längs einer gekrümmten Bahn bewegbar ist, da sich dabei in einfacher Weise ein Festlegen des jeweiligen Halterfußes in der Aufnahme erreichen läßt.

Die einfachste Möglichkeit, das Fixierelement längs einer gekrümmten Bahn zu bewegen ist die, daß das Fixierelement um eine Achse schwenkbar ist.

Das Fixierelement kann prinzipiell beliebig ausgebildet sei. Eine vorteilhafte Lösung sieht vor, daß das Fixierelement eine Nase aufweist, die so bewegbar ist, daß die Nase zwischen einer das Gegenlager nicht hintergreifenden Lösestellung und einer das Gegenlager hintergreifenden Fixierstellung bewegbar ist.

Eine besonders bevorzugte Lösung sieht vor, daß die Fixiereinrichtung als Schwenkkralle ausgebildet ist.

Hinsichtlich der Ausbildung der Aufnahmen wurden bislang keine näheren Angaben gemacht. So könnten die Aufnahmen prinzipiell eine an einer bestimmten Stelle des Fahrzeugs vorgesehene lokale Aufnahmen sein, in welche der Dachlastenträger fest einsetzbar ist. Eine besonders günstige Lösung sieht jedoch vor, daß die Aufnahmen als im Querschnitt C-förmige in Fahrzeuglängsrichtung verlaufende Aufnahmeschienen mit einem Auflageschenkel, einem Seitenschenkel und einem oberen Querschenkel ausgebildet sind, auf deren Auflageschenkel der Halterfuß aufsetzbar ist und deren oberer Querschenkel das Gegenlager bildet. Eine derartige Realisierungsform der Aufnahmen läßt sich besonders ästhetisch vorteilhaft in ein Fahrzeugdach integrieren.

Darüber hinaus schafft eine derartige Ausbildung der Aufnahmen die Möglichkeit, den Dachträger an verschiedenen Stellen der Aufnahmen zu plazieren.

Eine noch vorteilhaftere Lösung sieht vor, daß die Aufnahmen als im Querschnitt doppelt-C-förmige Aufnahmeschienen mit dem Auflageschenkel, zwei Seitenschenkeln und zwei oberen Querschenkeln ausgebildet sind und eine T-Nut bilden, in welche der jeweilige Halterfuß einsetzbar ist. Eine derartige Form der Aufnahmen ist vorzugsweise eine in vielen Fällen übliche Aufnahme an einem Kraftfahrzeug.

Eine derartige mit einer T-Nut versehene Aufnahmeschiene ist üblicherweise so ausgebildet, daß für das Einsetzen der Halterfüße die Aufnahmeschiene mit einem speziellen Ausschnitt versehen ist, im Bereich von welchem die Querschenkel entweder teilweise oder vollständig ausgeschnitten sind, um ein Einsetzen eines als Nutenstein wirkenden Körpers in die T-Nut zu ermöglichen.

Eine besonders günstige Variante der erfindungsgemäßen Lösung sieht jedoch vor, daß ein derartiger Ausschnitt nicht notwendig ist, sondern daß die Halterfüße bei in Lösestellung stehenden Fixierelementen durch eine sich zwischen den Querschenkeln über die Länge derselben erstreckende Aufnahmeöffnung der T-Nut in diese einsetzbar sind und daß die Fixierelemente bei in die T-Nut eingesetzten Halterfüßen in die Fixierstellung bringbar sind. Damit ist bei einer derartigen Lösung eine aufwendige Bearbeitung der Aufnahmeschiene nicht notwendig, sondern diese kann ein ganz einfaches mit konstantem Querschnitt und ohne Ausschnitt versehenes Strangpressprofil sein. Diese Lösung hat ferner noch den großen Vorteil, daß die gesamten Probleme bezüglich einer Verschmutzung oder auch die Verletzungsgefahren im Bereich des Ausschnitts vermieden werden können.

Hinsichtlich der Ausbildung der Koppeleinrichtung wurden bislang keine näheren Angaben gemacht. So ist die Koppeleinrichtung vorzugsweise als mechanische Koppeleinrichtung ausgebildet und könnte beispielsweise Seilzüge aufweisen, die eine mechanische Verbindung zwischen den Fixiereinrichtungen und dem Handbedienelement bilden. Das Vorsehen derartiger Seilzüge hat jedoch hinsichtlich des Bedienkomforts und einer leichtgängigen Bedienbarkeit der Fixiereinrichtungen Nachteile.

Aus diesem Grund ist vorzugsweise vorgesehen, daß die Koppeleinrichtung als die Fixiereinrichtungen sowohl in Richtung der Lösestellung als auch der Fixierstellung betätigendes Koppelgestänge ausgebildet ist, so daß über das Handbedienelement durch aktive Einwirkung auf die Fixiereinrichtungen sowohl deren Lösestellung als auch deren Fixierstellung herbeiführbar ist.

Um die Fixierelemente in der Fixierstellung fest an dem Gegenlager anzulegen und dabei Toleranzen und Spiel auszugleichen, ist vorzugsweise die Koppeleinrichtung so ausgebildet, daß sie die Fixierelemente in der Fixierstellung federelastisch beaufschlagt hält.

Dies kann durch in die Koppeleinrichtung integrierte federelastische Elemente oder aber auch durch elastische Deformation der Verbindungsteile, wie Gestängeteile, Hebelteile oder Welle der Koppeleinrichtung selbst realisiert sein.

Eine besonders vorteilhafte Ausbildung des Koppelgestänges sieht dabei vor, daß dieses eine längs des Querträgers verlaufende Koppelwelle und beidseitig derselben angeordnete Antriebselemente für die Fixiereinrichtungen aufweist. Insbesondere läßt sich über die längs des Querträgers verlaufende Welle in einfacher Weise eine Kopplung der an den beiderseits des Querträgers angeordneten Haltern vorgesehenen Fixiereinrichtungen erreichen.

Die Antriebselemente können ihrerseits unterschiedlichst ausgebildet sein. Um die Drehbewegung der Koppelwelle zur Betätigung der Fixiereinrichtungen umzusetzen ist vorzugsweise vorgesehen, daß die Antriebselemente über Verbindungsgestänge auf die Fixiereinrichtungen wirken.

Um in einfacher Weise die Drehbewegung der Koppelwelle in eine Bewegung der Verbindungsgestänge umzusetzen ist vorzugsweise vorgesehen, daß die Antriebselemente Getriebeelemente für die Betätigung der Verbindungsgestänge umfassen.

Derartige Getriebeelemente können in unterschiedlichster Art und Weise ausgebildet sein. Beispielsweise wäre es denkbar, die Getriebeelemente als Hebelgetriebe auszubilden, welche die Drehbewegung der Koppelwelle auf die Verbindungsgestänge umsetzen.

Eine andere besonders vorteilhafte Möglichkeit sieht vor, daß die Getriebeelemente als Kulissengetriebe ausgebildet sind, welche über eine Kulisse die Drehbewegung der Koppelwelle in eine im wesentlichen lineare Bewegung der Verbindungsgestänge umsetzen.

Alternativ dazu wäre es aber auch denkbar, die Getriebeelemente als Exzentergetriebe auszubilden.

Hinsichtlich des Zusammenwirkens des Handbedienelements und der Koppeleinrichtung wurden bislang keine näheren Angaben gemacht. So kann prinzipiell das Handbedienelement an jeder Stelle des Koppelgestänges angeordnet sein, um dieses zu betätigen. Eine besonders vorteilhafte Lösung sieht vor, daß das Handbedienelement auf einer Seite der Koppelwelle angeordnet ist.

Das Handbedienelement kann prinzipiell als Drehknopf ausgebildet sein, so daß über eine drehende Einwirkung auf dieses ein Verdrehen der Koppelwelle möglich ist. Eine besonders günstige Lösung sieht vor, daß das Handbedienelement als Hebel ausgebildet ist, da ein derartiger Hebel in einfacher Weise die Möglichkeit schafft, eine ausreichend große Bedienkraft auf die Koppeleinrichtung zu übertragen.

Um gleichzeitig sicherzustellen, daß die Fixereinrichtungen in der Fixierstellung verbleiben und somit der Dachträger fest in den Aufnahmen fixiert ist, ist vorzugsweise vorgesehen, daß das Handbedienelement in der Fixierstellung der Fixiereinrichtungen gegenüber dem nahe diesem angeordneten Halter festlegbar ist, so daß gleichzeitig über das Handbedienelement auch eine Sicherung der Fixierstellung der einzelnen Fixiereinrichtungen erfolgt.

Dieses Festlegen des Handbedienelements gegenüber dem Halter erfolgt vorzugsweise über eine Verriegelung, insbesondere ein Schloß, mit welchem das Handbedienelement gegenüber dem Halter fixierbar ist, so daß gleichzeitig der Dachträger in der fixierten Stellung durch die Verriegelung oder das Schloß relativ zum Fahrzeug gesichert ist und nicht vom Fahrzeug abgenommen werden kann. Damit ist im Fall der Verwendung eines Schlosses nicht nur eine Sicherung für den Einsatz des Dachträgers gegeben, sondern auch gegen Diebstahl.

Um einerseits das Handbedienelement einfach am Halter fixieren zu können, andererseits aber auch eine kollisionsfreie Betätigung relativ zum Halter zu ermöglichen, ist vorzugsweise vorgesehen, daß das Handbedienelement zwischen einer unbedienbaren Stellung, in welcher es am Halter fixierbar ist, und einer bedienbaren Stellung bewegbar ist, in welcher es nicht am Halter fixierbar ist.

Dabei besteht die Möglichkeit, das Handbedienelement zum Bedienen desselben, also in seiner bedienbaren Stellung weiter vom Halter zu entfernen, um Kollisionen der Hand mit dem Halter zu vermeiden.

Besonders einfach läßt sich das Bewegen des Handbedienelements von der unbedienbaren Stellung in die bedienbare Stellung realisieren, wenn das Handbedienelement in Richtung seiner Drehachse bewegbar ist, das heißt, daß eine lineare Bewegung des Handbedienelements in Richtung seiner Drehachse genügt, um dieses von der unbedienbaren Stellung in die bedienbare Stellung oder umgekehrt zu überführen.

Hinsichtlich der Ausbildung des Querträgers wurden im Zusammenhang mit den bisher beschriebenen Ausführungsbeispielen keine näheren Angaben gemacht. So sieht ein vorteilhaftes Ausführungabeispiel vor, daß der Querträger mit einer Querführungsnut versehen ist, welche beispielsweise als C-Nut ausgebildet ist, so daß in diese Nutensteine einführbar sind, um unmittelbar an dem Querträger Dachlasten zu fixieren oder an dem Querträger zusätzliche Dachlastenträger, wie beispielsweise Fahrradhalter oder Container oder Dachboxen oder ähnliches zu fixieren.

Vorzugsweise ist dabei die Querführungsnut so ausgebildet, daß sie endseitig des Querträgers liegende äußere Einführöffnungen für Nutensteine, die blockartige Körper oder Schienen oder ähnliches sein können, aufweist. Dadurch erfolgt eine zuverlässige Sicherung der Nutensteine gegen ein Verlassen der Querführungsnut durch Herausheben nach oben.

Um andererseits wiederum die Nutensteine gegen ein seitliches Entfernen aus der Querführungsnut zu sichern, ist vorgesehen, daß die äußeren Einführöffnungen der Querführungsnut durch Verschlußelemente verschließbar sind, welche vor den Einführöffnungen positionierbar und von den Einführöffnungen weg bewegbar sind.

Um sicherzustellen, daß die Verschlußelemente dann in ihrer die Einführöffnung verschließenden Stellung stehen, wenn auch das Handbedienelement in der Fixierstellung der Fixiereinrichtung steht und an dem Halter gesichert, beispielsweise mittels eines Schlosses festgelegt ist, ist vorzugsweise vorgesehen, daß die Verschlußelemente dann in ihrer die äußeren Einführöffnungen verschließenden Stellung gesichert sind, wenn das Handbedienelement in der Fixierstellung der Fixiereinrichtungen steht und an dem Halter gesichert ist. Das heißt, daß eine Wechselwirkung zwischen den Verschlußelementen und dem Handbedienelement dadurch erreichbar ist, daß eine Sicherung der Verschlußelemente in der gesicherten Stellung des Handbedienelements erfolgt.

Dies läßt sich besonders günstig dann realisieren, wenn die Verschlußelemente durch die Koppeleinrichtung sicherbar sind, das heißt, daß die Koppeleinrichtung nicht nur dazu beiträgt, die Verbindung zwischen dem Handbedienelement und den Fixiereinrichtungen herzustellen, sondern gleichzeitig auch dazu dient, die Verschlußelemente in ihrer die Einführöffnungen verschließenden Stellung zu sichern.

Zum Sichern der Verschlußelemente in der die Einführöffnungen verschließenden Stellung ist vorzugsweise vorgesehen, daß das auf seiten des Handbedienelements angeordnete Verschlußelement fest mit dem Handbedienelement verbunden ist und in der unbedienbaren Stellung des Handbedienelements in seiner die entsprechende Einführöffnung verschließenden Stellung steht und in der bedienbaren Stellung des Handbedienelements in seiner die Einführöffnung freigebenden Stellung steht.

Zur Sicherung des Verschlußelements auf einer dem Handbedienelement gegenüberliegenden Seite des Querträgers ist vorzugsweise vorgesehen, daß dieses Verschlußelement mittels eines Schwenkbügels schwenkbar am Halter gehalten ist und von einer die entsprechende äußere Einführöffnung verschließenden Stellung in eine die Einführöffnung freigebende Stellung verschwenkbar ist.

Vorzugsweise ist dabei das Verschlußelement in einer quer zur Längsrichtung des Querträgers verlaufenden Ebene verschwenkbar.

Zum Sichern dieses Verschlußelements in seiner die entsprechende Einführöffnung verschließenden Stellung ist vorzugsweise vorgesehen, daß der Schwenkbügel durch das Bewegen des Handbedienelements von der bedienbaren Stellung in die unbedienbare Stellung sicherbar ist.

Dies ist vorzugsweise durch eine Verschiebung der längs des Querträgers verlaufenden Koppelwelle möglich, die endseitig ein Feststellelement aufweist, mit welchem der Schwenkbügel in der Stellung, in welcher das Verschlußelement die äußere Einführöffnung verschließt, festlegbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht eines erfindungsgemäßen Dachträgersystems mit geschnitten dargestelltem Querträger entgegen der Fahrtrichtung;
- Fig. 2: eine perspektivische Darstellung des erfindungsgemäßen Dachträgersystems im Bereich des Halters mit Handbedienelement in Fig. 1 von außen;
- Fig. 3: eine perspektivische Darstellung im Bereich des Halters mit Handbedienelement in Fig. 1 von innen;
- Fig. 4: eine perspektivische Darstellung im Bereich des Halters mit Handbedienelement ohne Aufnahmeschiene;
- Fig. 5: eine Seitenansicht des Halters mit Handbedienelement mit aufgeschnittener Aufnahmeschiene mit vorpositioniertem Halterfuß und nicht ineinandergreifenden Formschlußelementen von Halterfuß und Aufnahmeschiene;
- Fig. 6: eine Seitenansicht entsprechend Fig. 5 mit ineinandereingreifenden Formschlußelementen von Halterfuß und Aufnahmeschiene;
- Fig. 7: einen Schnitt längs Linie 7-7 in Fig. 6 bei in bedienbarer Stellung stehendem Handbedienelement jedoch in Fixierstellung stehender Fixiereinrichtung;
- Fig. 8: einen Schnitt ähnlich Fig. 7 bei um 30° aus der Fixierstellung heraus in Richtung einer Lösestellung gedrehtem Handbedienelement;
- Fig. 9: einen Schnitt ähnlich Fig. 8 bei um 60° gegenüber der Fixierstellung gedrehtem Handbedienelement;
- Fig. 10: einen Schnitt ähnlich Fig. 7 bei in Lösestellung stehendem Handbedienelement;
- Fig. 11: eine Seitenansicht des Halters ohne Handbedienelement und
- Fig. 12: einen Schnitt längs Linie 12-12 in Fig. 11.

Ein Ausführungsbeispiel eines als Ganzes mit 10 bezeichneten Dachträgersystems, umfaßt einen in Aufnahmen 12, welche fest an einem Kraftfahrzeugdach 14 angeordnet sind, einsetzbaren Dachträger 16.

Der Dachträger 16 hat einen ungefähr parallel zum Dach 14 und quer zur Fahrtrichtung verlaufenden Querträger 18, der an seinen jeweiligen Enden 20 und 22 mit Haltern 24 und 26 versehen und mit diesen in den Aufnahmen 12 fixierbar ist, wobei hierzu jeder der Halter 24, 26 mit einem Halterfuß 28 in die jeweils für diesen vorgesehene Aufnahme 12 eingreift und in dieser fixierbar ist.

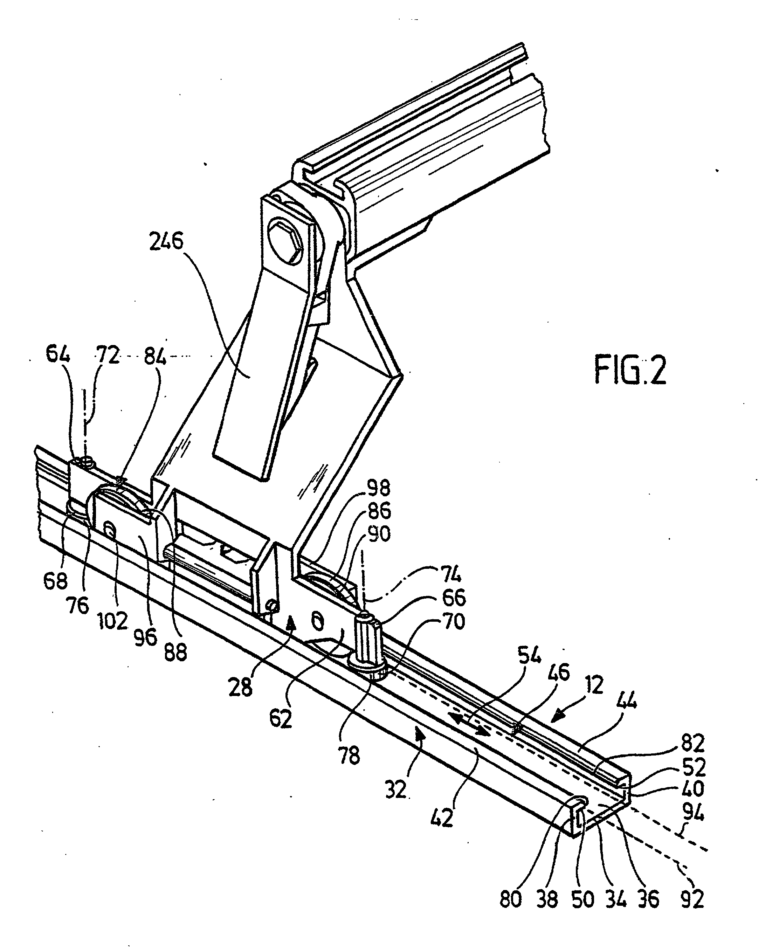

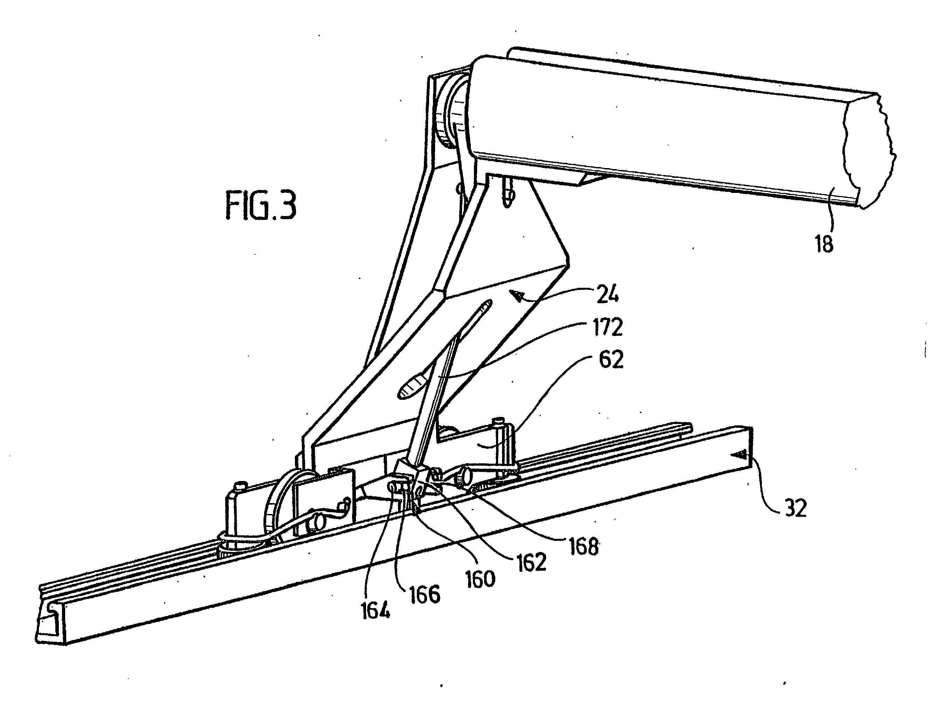

Wie in Fig. 2 und 3 nochmals vergrößert dargestellt, ist jede der Aufnahmen 12 durch eine Aufnahmeschiene 32 gebildet, welche ihrerseits einen Auflageschenkel 34 aufweist, der eine Auflagefläche 36 trägt. Beiderseits des Auflageschenkels 34 erheben sich über die Auflagefläche 36 Seitenschenkel 38 und 40 der Aufnahmeschiene 32, die jeweils obere Querschenkel 42 bzw. 44 tragen, welche sich von den Seitenschenkeln 38, 40 ausgehend aufeinander zu und ungefähr parallel zum Auflageschenkel 34 erstrecken und eine Aufnahmeöffnung 46 der Aufnahmeschiene 32 begrenzen, durch welche ein sich zwischen der Auflagefläche 36 und den Querschenkeln 42 und 44 liegender Innenraum 48 der Aufnahmeschiene 32 zugänglich ist, wobei insbesondere die oberen Querschenkel 42 und 44 mit ihren sich von den Seitenschenkeln 38 und 40 ausgehenden und der Auflagefläche 36 zugewandten Unterseiten 50 und 52 dem Innenraum 48 zugewandt angeordnet sind.

Vorzugsweise erstreckt sich die Aufnahmeschiene 32 mit ihrer Längsrichtung 54 ungefähr parallel zur Fahrtrichtung des jeweiligen Kraftfahrzeugs.

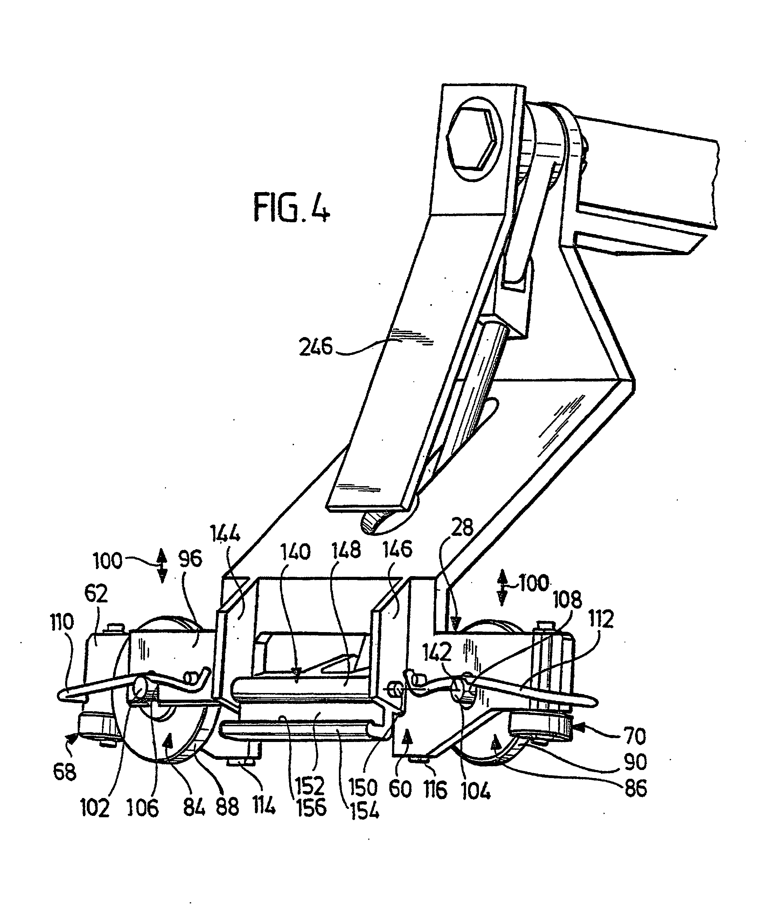

In diese Aufnahmeschienen 32 ist jeweils der Halterfuß 28 einsetzbar und vorzugsweise in der Längsrichtung 54 verschiebbar. Hierzu umfaßt der jeweilige Halterfuß 28, wie in Fig. 4 dargestellt, einen Fußkörper 60, welcher eine Grundplatte 62 aufweist, die sich parallel zur Längsrichtung 54 und quer zur Auflagefläche 36 der Aufnahmeschiene 32 erstreckt. Die Grundplatte 62 trägt dabei an ihren in der Längsrichtung 54 im Abstand voneinander angeordneten Enden 64 und 66 jeweils eine Querführungsrolle 68 und 70, welche um quer zur Auflagefläche 36, vorzugsweise senkrecht zu dieser verlaufende Achsen 72 bzw. 74 drehbar gelagert sind und in einem derartigen Abstand über der Auflagefläche 36 geführt sind, daß jede der Führungsrollen 68, 70 mit ihrer jeweiligen Mantelfläche 76, 78 zwischen einander zugewandten Stirnkanten 80 und 82 der oberen Querschenkel 42, 44 liegt und somit in der Aufnahmeöffnung 46 läuft, so daß der jeweilige Halterfuß 28 durch die beiden Führungsrollen 68 und 70 quer zur Längsrichtung 54 der jeweiligen Aufnahmeschiene 32 an den Querschenkeln 42, 44 gegen Bewegungen quer zur Längsrichtung 54 und gegen ein Verkanten in der Aufnahmeschiene 32 gesichert geführt ist.

Darüber hinaus sind nahe der Enden 64 und 66 der Grundplatte 62 Laufrollen 84 und 86 vorgesehen, welche auf der Auflagefläche 36 aufsetzbar sind.

Vorzugsweise sind die Laufrollen 84 und 86 auf einander gegenüberliegenden Seiten der Grundplatte 62 angeordnet, so daß die eine Laufrolle 84 zwischen der Grundplatte 62 und dem einen oberen Querschenkel 42 angeordnet ist und die andere Laufrolle 86 zwischen der Grundplatte 62 und dem anderen oberen Querschenkel 44, und folglich die Laufrollen 84 und 86 mit ihren Mantelflächen 88 und 90 längs zueinander paralleler Laufbahnen 92 bzw. 94 auf der Auflagefläche 36 in der Längsrichtung 54 bewegbar sind, wobei die Laufbahnen 92 und 94 quer zur Längsrichtung 54 einen Abstand voneinander aufweisen.

Mit den an jedem Halterfuß 28 angeordneten Laufrollen 84 und 86 sowie den Führungsrollen 68 und 70 ist der jeweilige Halterfuß 28 leicht, insbesondere mit geringem Reibungswiderstand in der jeweiligen Aufnahmeschiene 32 verfahrbar, so daß ein leichtes Positionieren des Dachträgers durch Verschieben der Halterfüße 28 in der entsprechenden Aufnahmeschiene 32 in Fahrtrichtung, das heißt in Längsrichtung 54 der Aufnahmeschiene 32, möglich ist, wobei die Laufrollen 84 und 86 für eine leicht verschiebliche Abstützung des jeweiligen Halterfußes 28 auf der Auflagefläche 36 sorgen und die Führungsrollen 68 und 70 durch ihr Anliegen an den Stirnseiten 80 und 82 der oberen Querschenkel 42 und 44 für eine leicht laufende verkantungsfreie Querführung des jeweiligen Halterfußes 28 in der Aufnahmeschiene 32 sorgen.

Darüber hinaus sind die Laufrollen 84 und 86, wie in Fig. 3 und 4 deutlich erkennbar, jeweils zwischen der Grundplatte 62 und einer dem jeweiligen Querschenkel 42 oder 44 zugewandt angeordneten Zusatzplatte 96 bzw. 98 des Fußkörpers 60 geführt und dabei relativ zur Grundplatte 62 und quer zur Auflagefläche 36 in einer Höhenrichtung 100 dadurch höhenverstellbar, daß eine jeweilige Lagerachse 102, 104 der Laufrolle 84, 86 in Langlöchern 106 bzw. 108 in der Höhenrichtung 100 bewegbar ist.

Zusätzlich sind an dem Fußkörper 60 gehaltene U-förmige Federbügel 110, 112 vorgesehen (Fig. 3 und 4), welche die Lagerachsen 102 und 104 derart beaufschlagen, daß die auf der Auflagefläche 36 abgestützten Laufrollen 84 und 86 die Grundplatte 62 möglichst hoch über der Auflagefläche 36 führen, wenn die Laufrollen 84, 86 mit ihren Mantelflächen 88, 90 auf den Laufbahnen 92, 94 aufsitzen und längs dieser laufen.

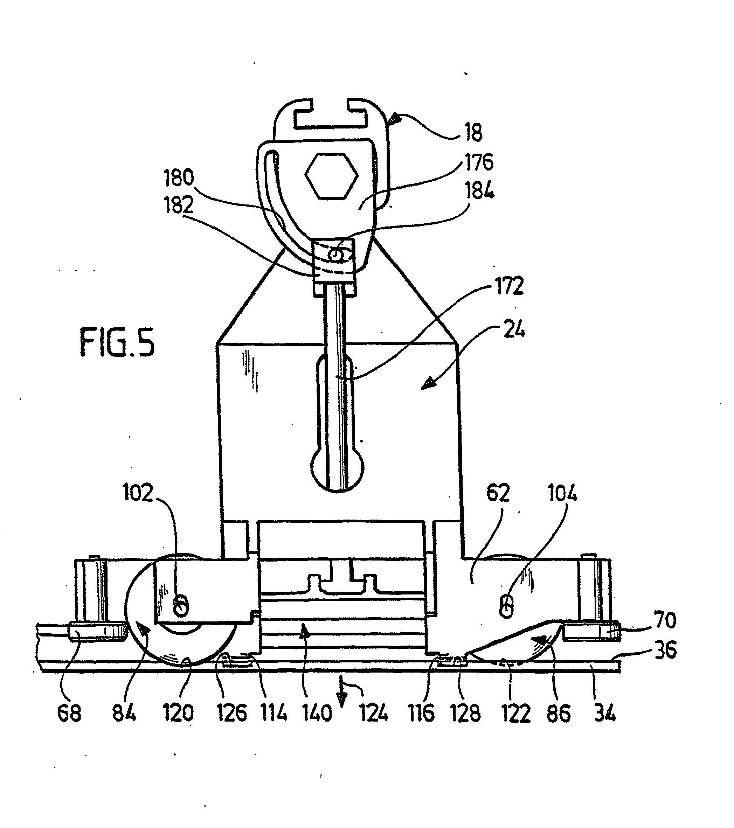

Insbesondere wird die Grundplatte 62 so hoch geführt, daß, wie in Fig. 5 dargestellt, Fixierkörper 114 und 116, welche an der Grundplatte 62 vorgesehen sind, über der Auflagefläche 36 ohne Berührung mit dieser bewegbar sind.

Um dem Benutzer bei der Montage eine definierte Position des jeweiligen Haltefußes 28 in der jeweiligen Aufnahme 12 zu vermitteln, in der der Dachträger 16 vorzugsweise bezogen auf die Längsrichtung 54 in den Aufnahmeschienen 32 positionierbar ist, sind die Laufbahnen 92 und 94 mit für die Laufrollen 84 und 86 vorgesehenen Vertiefungen 120, 122 versehen, welche insbesondere im Falle des leichten Verschiebens des jeweiligen Halterfußes 28 in der Aufnahmeschiene 32 einem Benutzer die bevorzugte Position des Dachträgers 16 dadurch anzeigen, da beim Eintauchen der Laufrollen 84, 86 in die Vertiefungen 120 und 122 ein leichter Widerstand gegen ein Weiterschieben durch "Einrasten" der Laufrollen 84, 86 in den Vertiefungen 120, 122 feststellbar ist.

Selbst bei in den Vertiefungen 120, 122 sitzenden Laufrollen 84, 86 wird die Grundplatte 62 noch so hoch über der Auflagefläche 36 geführt, daß die Fixierkörper 114, 116 noch berührungslos mit der Auflagefläche 36 über dieser bewegbar sind (Fig. 5).

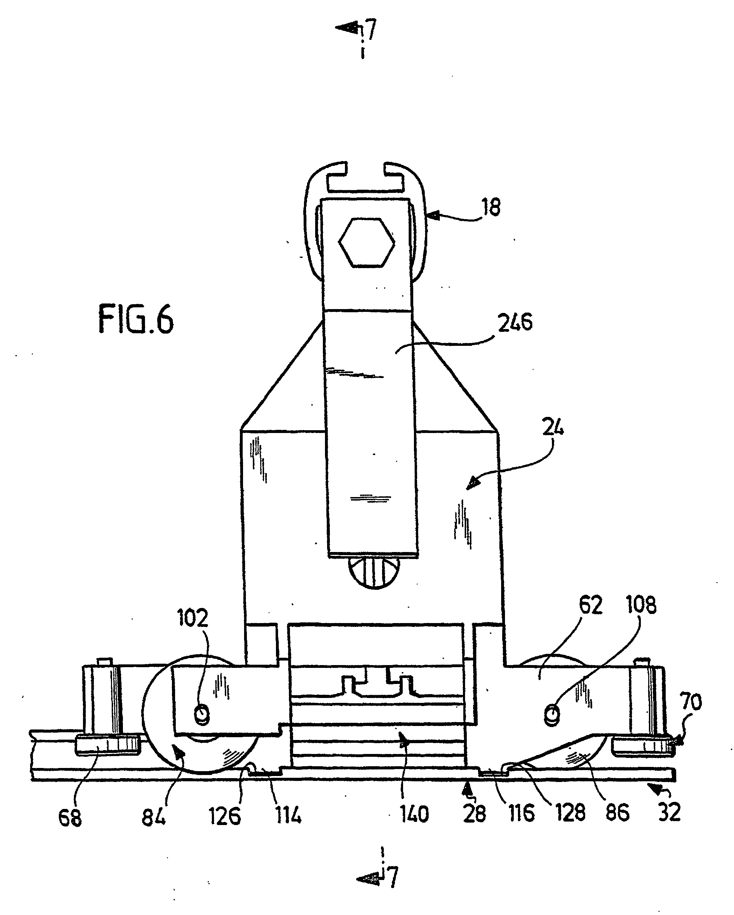

Erst durch ein Beaufschlagen der Grundplatte 62 in einer Fixierrichtung 124 ist es möglich, die Grundplatte 62 relativ zu den Lagerachsen 102, 104 so weit in Richtung des Auflageschenkels 34 zu verschieben, daß die Grundplatte 62 in Berührung mit der Auflagefläche 36 kommt und die Fixierkörper 114, 116 in diesen zugeordneten Fixieraufnahmen 126, 128 in dem Auflageschenkel 34 eintauchen und damit eine formschlüssige Festlegung der Grundplatte 62 relativ zur Aufnahmeschiene 32 bewirken. Damit ist die Grundplatte 62 und somit der gesamte Halterfuß 28 nicht mehr relativ zur jeweiligen Aufnahmeschiene 32 verschiebbar (fig. 6).

In diesem Fall erfolgt bei Beaufschlagung der Grundplatte 62 in der Fixierrichtung 124 ein Verschieben der Lagerachsen 102, 104 relativ zur Grundplatte 62, und zwar gegen die Kraftwirkung der Federbügel 110 und 112, so daß insgesamt die Grundplatte 62 in Richtung der Auflagefläche 36 absenkbar ist.

Zum Fixieren der Haltefüße 28 ist jeder Halterfuß 28 mit einer eine Fixiereinrichtung darstellenden und als Ganzes mit 140 bezeichneten Schwenkkralle versehen, welche um eine ungefähr parallel zur Längsrichtung 54 verlaufende Schwenkachse 142 verschwenkbar an dem Halterfuß 28 gelagert ist. vorzugsweise trägt die Grundplatte 62 hierzu zwei Lagerlaschen 144 und 146 zwischen denen die Schwenkkralle 140 angeordnet und an denen die Schwenkkralle 140 um die Schwenkachse 142 schwenkbar gelagert ist. Die Schwenkkralle 140 umfaßt ihrerseits einen Lagerkörper 148, an welchem eine die Lagerlaschen 144 und 146 durchsetzende Schwenkwelle 150 gehalten ist. Von dem Lagerkörper 148 ausgehend erstreckt sich ein Mittelsteg 152 der Schwenkkralle, zu welcher dann ein Nasensteg 154 quer, das heißt abgewinkelt verläuft, der seinerseits an seinem Ende eine Nase 156 aufweist.

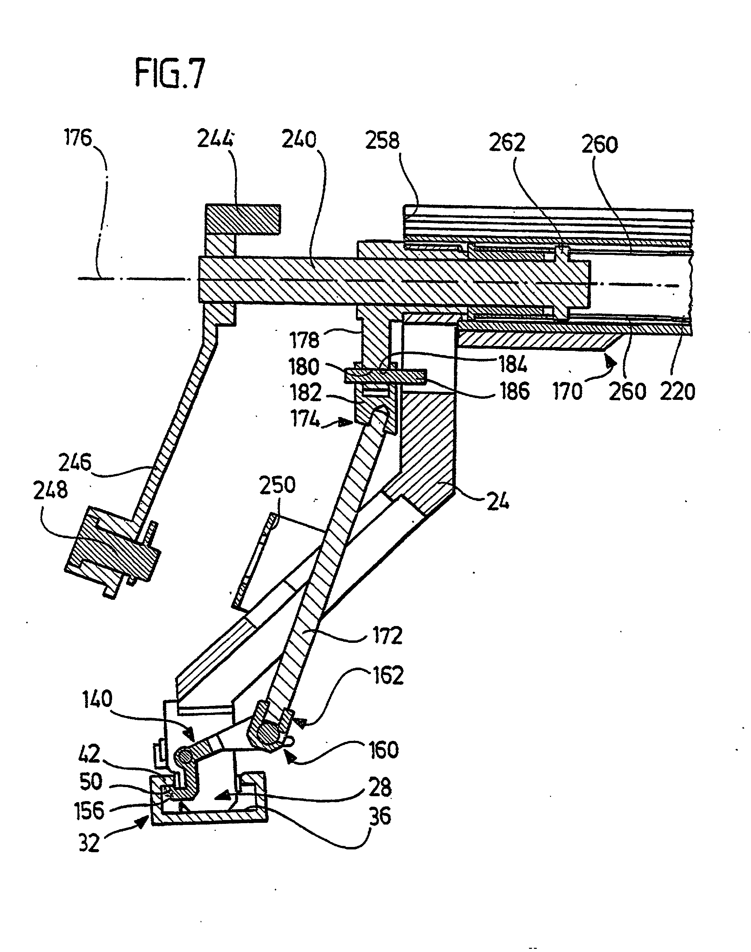

Der Nasensteg 154 ist dabei so angeordnet, daß dieser in der Lage ist, seitlich der Grundplatte 62 eine der Unterseiten 50, 52 der oberen Querschenkel 42, 44 auf Seiten des Innenraums 48 zu hintergreifen, wobei die Nase 156 in diesem Fall dann an der Unterseite 50 zur Anlage kommt, so wie dies in Fig. 7 dargestellt ist. Um die Schwenkkralle 140 dergestalt verschwenken zu können, weist diese eine beispielsweise in Fig. 3 und 7 dargestellte Betätigungsgabel 160 auf, in welcher ein Gestängekoppelteil 162 schwenkbar gelagert ist, wobei dieses Gestängekoppelteil 162 vorzugsweise einen Lagerbolzen 164 aufweist, welcher in Aufnahmen 166, 168 der Betätigungsgabel 160 schwenkbar gelagert ist.

Das Gestängekoppelteil 162 ist fest mit einer Betätigungsstange 172 einer als Ganzes mit 170 bezeichneten Koppeleinrichtung verbunden. Die Betätigungsstange 172 ist in Richtung auf den jeweiligen Halterfuß 28 zu oder von diesem weg durch ein Betätigungsgetriebe 174 der Koppeleinrichtung 170 verschwenkbar, wobei das Betätigungsgetriebe 174 eine um eine Drehachse 176 drehbaren Kulissenkörper 178 aufweist, der eine in sich verändernden im Abstand von der Drehachse 176 verlaufende Kulissenbahn 180 aufweist, in welche ein an einem Kopf 182 der Betätigungsstange 172 gehaltener Zapfen 186 als Kulissenfolger eingreift.

Steht der Kulissenkörper 178 so, daß ein den Lagerbolzen 186 baufschlagender Bereich 184 der Kulissenbahn 180 den größten Abstand von der Drehachse 176 aufweist, so ist die Betätigungsstange 172 maximal in Richtung des Haltefußes 28 verschoben und das Gestängekoppelteil 162 wirkt mit der Betätigungsgabel 160 so zusammen, daß die Schwenkkralle 140, wie in Fig. 7 dargestellt, in ihrer Fixierstellung steht, in welcher sie mit der Nase 156 an der Unterseite 50 des oberen Querschenkels 42 anliegt. Aufgrund der schwenkbaren Lagerung der Schwenkkralle 140 an der Grundplatte 62 wird diese in Richtung der Auflagefläche 36 beaufschlagt und in Richtung der Auflagefläche 36 dadurch verschoben, daß die Federbügel 110 und 112 ein Bewegen der Grundplatte 62 relativ zu den Lagerachsen 102 und 104 zulassen, so daß die Fixierkörper 114, 116 in die Fixieraufnahmen 126, 128 formschlüssig eintauchen können, so daß der Halterfuß 28 direkt relativ zur Aufnahmeschiene 32 festgelegt ist.

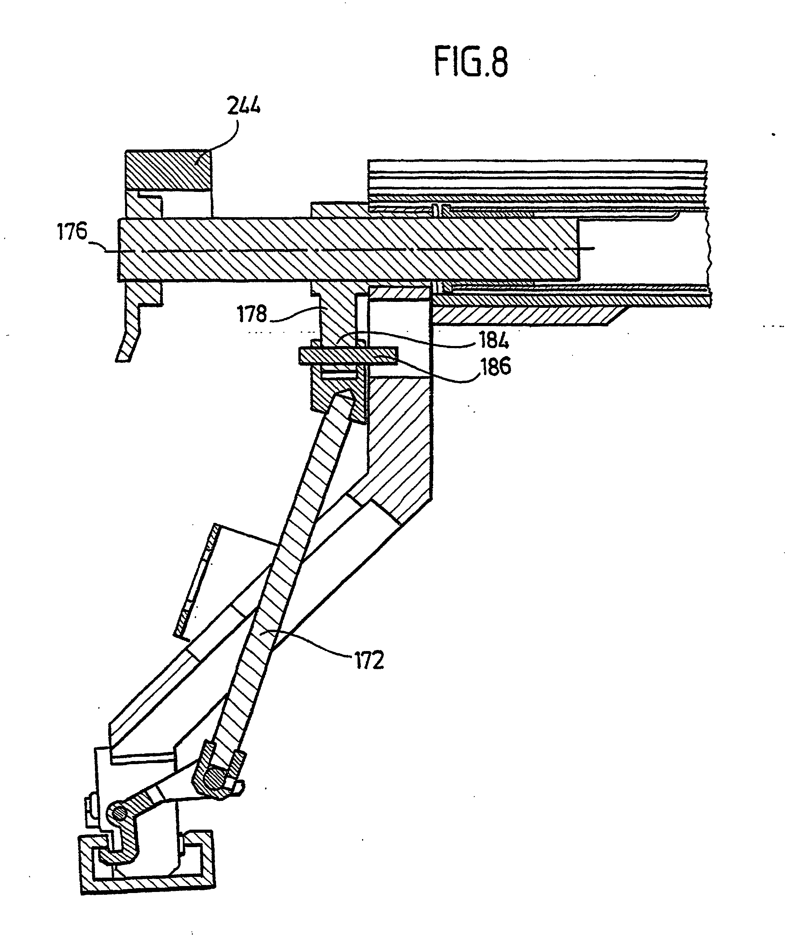

Wird dagegen der Kulissenkörper 178 um die Drehachse 176 gedreht, beispielsweise um 30°, wie dies in Fig. 8 dargestellt ist, so dient diese Drehung lediglich dazu, den Bereich 184 der Kulissenbahn 180 langsam zu verlassen, so daß zunächst kein nennenswertes Bewegen der Betätigungsstange 172 in Richtung des Kulissenkörpers 178 erfolgt und somit nur eine geringe Bewegung der Nase 156 von der Unterseite 50 weg erfolgt. Durch die geringfügige Drehung des Kulissenkörpers 178 erfolgt lediglich ein Entspannen der Fixierstellung der Schwenkkralle 140 bewirkt, wie in Fig. 8 dargestellt.

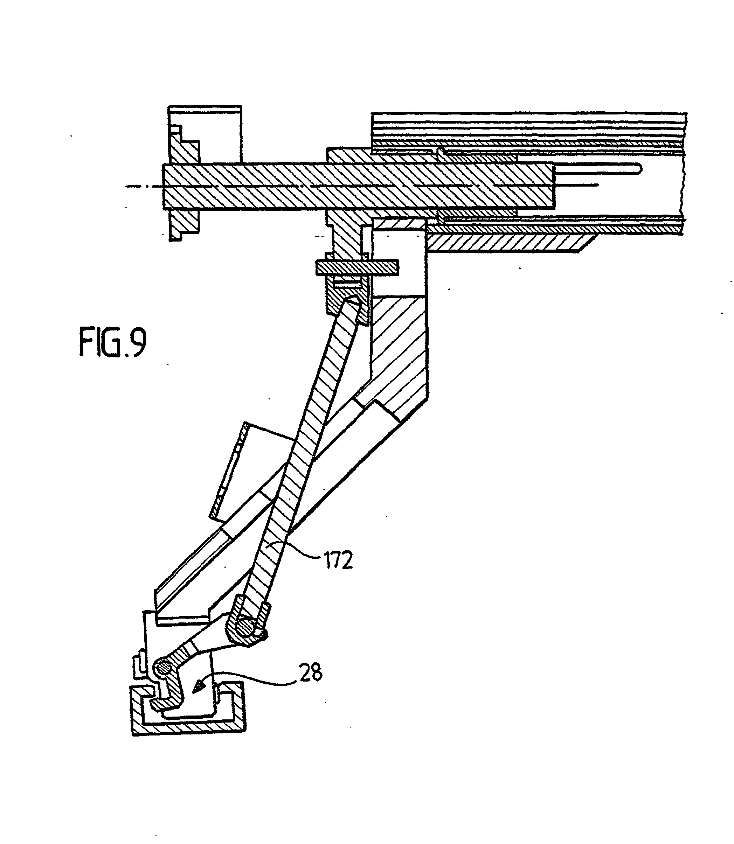

Ein Weiterdrehen des Kulissenkörpers 178 in eine Verschiebestellung führt dazu, daß die Nase 156 sich so weit von der Unterseite 50 des Querschenkels 42 weg bewegt, daß ein Verschieben des Dachträgers 16 mit in den Aufnahmeschienen 32 geführten Halterfüßen 28 möglich ist, ohne daß die Halterfüße 28 sich aus den Aufnahmeschienen herausheben können, wie dies in Fig. 9 dargestellt ist, da die Schwenkkrallen 140 mit den Nasen 156 nach wie vor die Unterseite 50 noch hintergreifen.

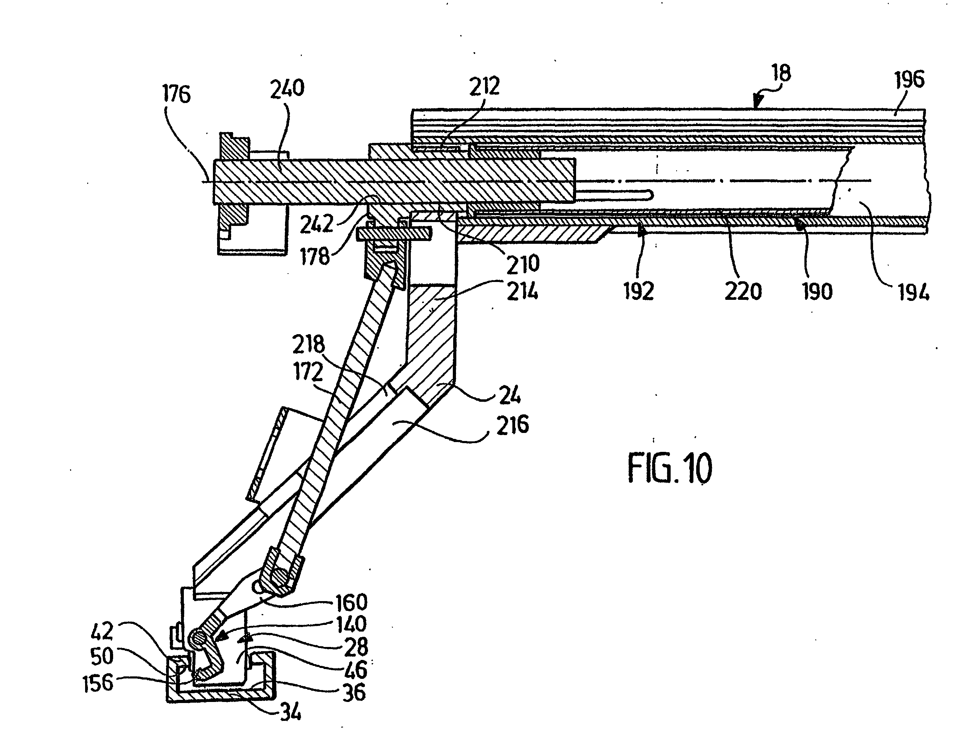

Erst ein weiteres Drehen des Kulissenkörpers 178 in eine Lösestellung, dargestellt in Fig. 10 bewirkt ein Bewegen der Betätigungsstange 172 von dem Halterfuß 28 weg und somit ein Verschwenken der Schwenkkralle 140 dergestalt, daß die Nase 156 sich so weit von der Unterseite 50 des oberen Querschenkels 42 wegbewegt, bis die Nase 156 unterhalb der Aufnahmeöffnung 46 liegt und somit der Halterfuß 28 mitsamt der geschwenkten Fixierkralle 140 aus der Aufnahmeschiene 32 durch die Aufnahmeöffnung 46 herausbewegbar ist.

In dieser Lösestellung der Fixierkralle 140 ist somit ein Einführen des Halterfußes 28 in den Innenraum 48 der Aufnahmeschiene 32 oder ein Herausnehmen des Halterfußes 28 aus diesem möglich, ohne daß die Nase 156 dies behindert. Erst bei Verschwenken der Nase 156 von der in Fig. 10 dargestellten Lösestellung in Richtung der Unterseite 50 des Querschenkels 42 hintergreift die Nase 156 in der Verschiebestellung die Unterseite 50 und verhindert ein Herausnehmen des Halterfußes 28 aus dem Innenraum 48 der Aufnahmeschiene 32 und bewegt sich schließlich in die Fixierstellung, wobei gleichzeitig die Grundplatte 62 des Halterfußes in Richtung der Auflagefläche 36 beaufschlagt wird, um die Fixierkörper 114, 116 in die Fixieraufnahmen 126, 128 eintauchen zu lassen.

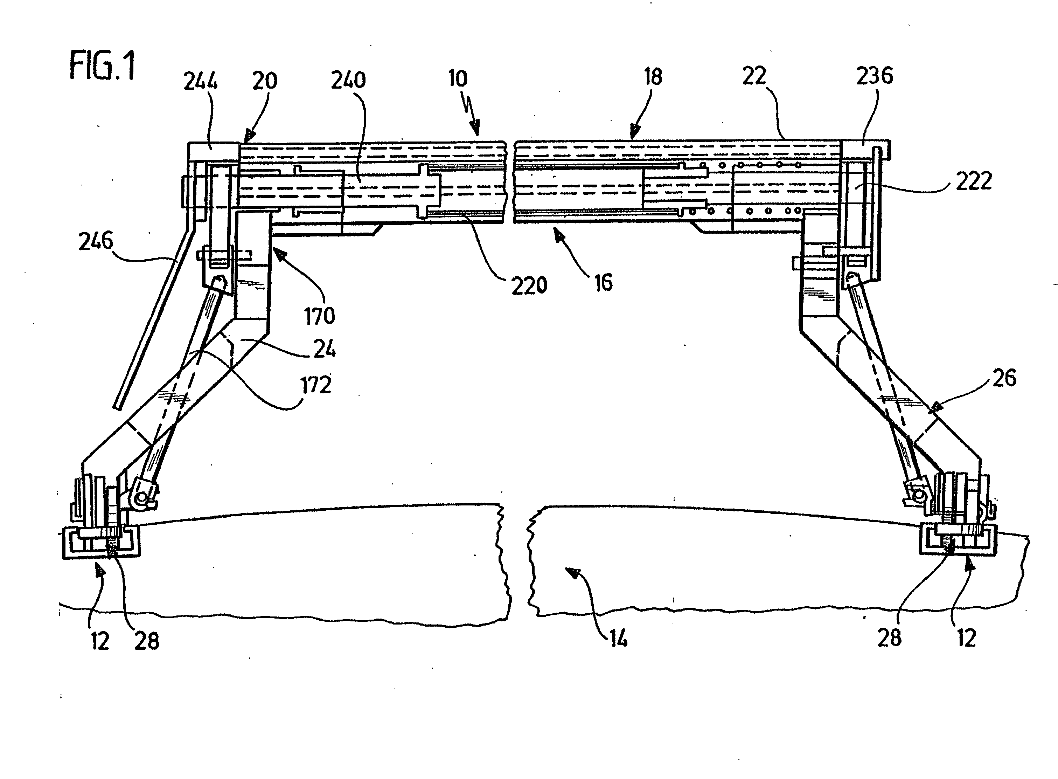

Da jeder der beiden, auf gegenüberliegenden Seiten des Querträgers 18 angeordneten Halterfüße 28 mit einer derartigen Schwenkkralle 140 versehen ist, sind jeweils beiderseits des Querträgers 18 die Betätigungsgetriebe 174 vorgesehen. Diese sind durch eine den Querträger 18 durchsetzende Koppelwelle 190 miteinander gekoppelt (Fig. 1, 7 bis 12).

Hierzu weist vorzugsweise der Querträger 18 einen Rohrkörper 192 auf, welcher eine Innenkammer 194 bildet, die sich über die gesamte Quererstreckung des Querträgers 18 erstreckt und endseitig offen ist. Ferner sitzt über dem Rohrkörper 192 ein einstückig an diesen angeformter Nutkörper 196 mit einer T-Nut 198 mit einer dem Dach 14 des Kraftfahrzeugs abgewandt angeordneten Nutöffnung 200, wobei in die T-Nut 198 Nutensteine zum Fixieren von Lasten oder Lastenträgern einsetzbar und vorzugsweise kraftschlüssig fixierbar sind.

In der Innenkammer 194 liegt dann die Koppelwelle 190 und ist um die Drehachse 176 drehbar gelagert, so daß die drehbare Lagerung der Koppelwelle 190 gleichzeitig eine drehbare Lagerung für die Kulissenkörper 178 darstellt.

Vorzugsweise ist an jeden Kulissenkörper 178 eine Hülse 210 angeformt, welche in einer Hülsenaufnahme 212 um die Drehachse 176 drehbar gelagert ist, wobei die Hülsenaufnahme 212 in dem jeweiligen Halter 24, 26, und zwar einem sich an den Rohrkörper 192 anschließenden Bereich desselben, angeordnet ist, wobei der jeweilige Halter 24, 26 selbst fest mit dem Rohrkörper 192 verbunden ist (Fig. 7 bis 12).

Jeder der Halter 24, 26 ist dabei vorzugsweise so ausgebildet, daß er einen die Hülsenaufnahme 212 tragenden ersten Abschnitt 214 aufweist, der sich ungefähr quer zum Querträger 18 erstreckt, dann einen zweiten Abschnitt 216, welcher vom ersten Abschnitt 214 ausgehend jeweils schräg nach außen in Richtung einer dem Querträger gegenüberliegenden Seite zum jeweiligen Halterfuß 28 verläuft und fest mit diesem verbunden ist. Der zweite Abschnitt 216 ist dabei noch mit einem Durchbruch 218 versehen, durch welche die Betätigungsstange 172 hindurchverläuft, um sich vom Kulissenkörper 178 zur Betätigungsgabel 160 zu erstrecken, die auf einer dem anderen Halterfuß 28 zugewandten Innenseite des jeweiligen Halterfußes 28 angeordnet ist, während der jeweilige Kulissenkörper 178 auf einer dem jeweils gegenüberliegenden ersten Abschnitt 214 abgewandten Außenseite des jeweiligen ersten Abschnitts 214 angeordnet ist.

Die Lagerung der Koppelwelle 190 erfolgt über die jeweils in den Hülsenaufnahmen 212 der Halter 24, 26 drehbar gelagerten Hülsen 210 der Kulissenkörper 178.

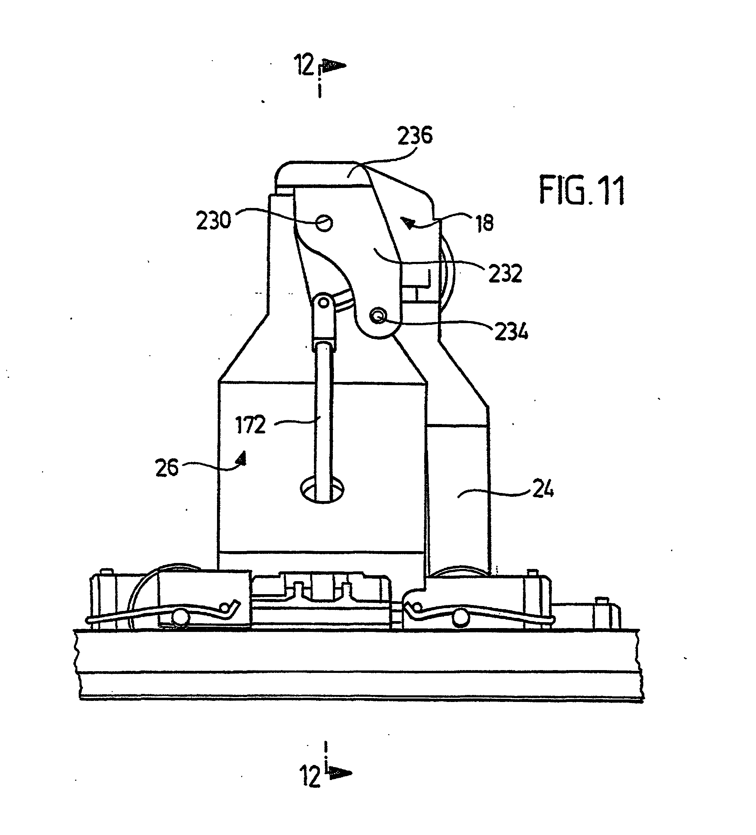

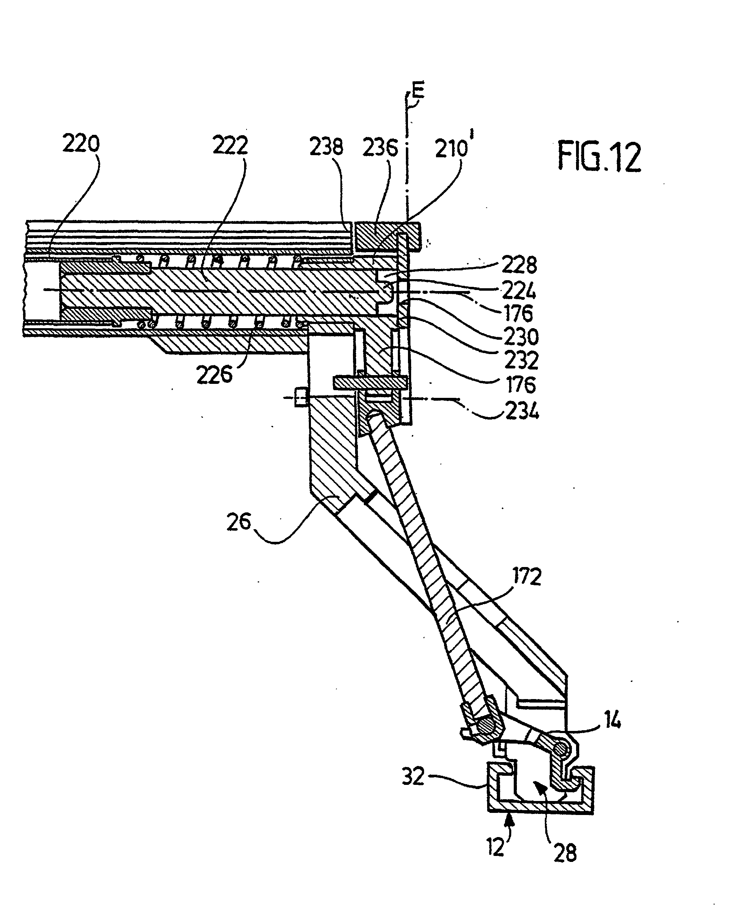

Die Koppelwelle 190 umfaßt einen Mittelabschnitt 220, welcher vorzugsweise als Rohr ausgebildet ist und auf einer Seite einen fest mit diesem Rohr 220 verbundenen Mehrkantzapfen 222 aufweist, der drehfest in der Hülse 210' des Halters 26 aufgenommen ist und an einer dem Rohr 220 abgewandten Stirnseite einen Feststellzapfen 224 trägt (Fig. 11, 12). Ferner ist der Mehrkantzapfen 222 mittels einer Feder 226, welche sich vorzugsweise an der Hülse 210' abstützt, so beaufschlagt, daß der Feststellzapfen 224 das Bestreben hat, in einen für die Aufnahme des Mehrkantzapfens 222 in der Hülse 210' vorgesehenen Durchbruch 228 einzutauchen. Nur bei Beaufschlagung des Rohrs 220 in Richtung der Hülse 210' bewegt sich der Feststellzapfen 224 aus dem Durchbruch heraus und dringt in eine Feststellausnehmung 230 ein, die in einem Schwenkbügel 232 vorgesehen ist, der um eine Achse 234 schwenkbar am Halter 26 gelagert ist. Der Schwenkbügel 232 trägt dabei an einem oberen Ende einen Verschlußkörper 236, welcher vor eine endseitige Öffnung 238 der T-Nut 198 bewegbar ist, um diese zu verschließen. Der Verschlußkörper ist durch Verschwenken des Schwenkbügels 232 um die Achse 234 von seiner vor der Öffnung 238 stehenden Verschlußstellung in eine diese freigebende Stellung neben der Öffnung 238 verschwenkbar. In der Verschlußstellung fluchtet jedoch die Feststellausnehmung 230 mit dem Feststellzapfen 224, so daß bei in die Feststellausnehmung 230 eingreifenden Feststellzapfen 224 ein Verschwenken des Schwenkbügels 232 um die Achse 234 nicht mehr möglich ist und der Verschlußkörper 236 in seiner Verschlußstellung gesichert ist.

Auf seiner dem Mehrkantzapfen 222 gegenüberliegenden Seite ist das Rohr 220 ebenfalls mit einem Mehrkantzapfen 240 verbunden (Fig. 7), allerdings ist der Mehrkantzapfen 240 relativ zum Rohr 220 in Richtung der Drehachse 176 verschiebbar. Der Mehrkantzapfen 240 durchsetzt ebenfalls einen Durchbruch 242 in der Hülse 210 und trägt auf seiner über den Kulissenkörper 178 überstehenden Außenseite einen Verschlußkörper 244 und außerdem ein in Fig. 7 dargestelltes Handbedienelement 246. Dieses Handbedienelement 246 ist von einer in Fig. 7 dargestellten bedienbaren Stellung, in welcher es im Abstand von dem Halter 24 steht und in welcher der Mehrkantzapfen 240 maximal aus dem Rohr 220 ausgezogen ist, in eine unbedienbare Stellung bewegbar, in welcher er mit einem Schloß 248 am Halter 24 festlegbar und verriegelbar ist, vorzugsweise an einer Schloßaufnahme 250, die am Halter 24 angeordnet ist. Um das Handbedienelement 246 von seiner nicht bedienbaren, an dem Halter 24 festgelegten und durch das Schloß 248 unlösbar festgelegten Stellung in eine bedienbare Stellung zu überführen, erfolgt ein Verschieben des Mehrkantzapfens 240 ausschließlich in Richtung der Drehachse 176 dergestalt, daß sich der Verschlußkörper 244 von einer endseitigen Öffnung 258 der T-Nut 198 auf dieser Seite entfernt. Erfolgt dieses Verschieben des Verschlußkörpers 244 gegenüber der Öffnung 258 weit genug, so können in die T-Nut 198 in üblicher Weise Nutensteine zum Fixieren von Lasten oder Lastenträgern eingeführt werden.

Gleichzeitig ist in der bedienbaren Stellung des Handbedienelements 246 die Möglichkeit geschaffen, dieses einfach ohne Kollision mit dem Halter 24 zu greifen und zu drehen, wobei damit eine Drehung der beiden Kulissenkörper 178, die durch die Koppelwelle 190 gekoppelt sind, möglich ist und somit ein Betätigen der Schwenkkrallen 140 im Bereich beider Halterfüße 28. Zur einerseits drehfesten und andererseits in Richtung der Drehachse 176 verschieblichen Verbindung des Mehrkantzapfens 240 mit dem Rohr 220 ist das Rohr 220 mit mindestens einem, vorzugsweise zwei auf gegenüberliegenden Seiten angeordneten Langlöchern 260 versehen, in welche quer zur Drehachse 176 über den Mehrkantzapfen 240 überstehende Mitnehmer 262 eintauchen, die in den Langlöchern 260 in Richtung der Drehachse 176 verschiebbar, jedoch nicht in Umfangsrichtung zur Drehachse 176 relativ zu den Langlöchern 260 bewegbar sind. Damit besteht eine freie Verschiebbarkeit des Mehrkantzapfens 240 über die Länge der Langlöcher 260 relativ zum Rohr 220. Die Langlöcher 260 sind dabei so bemessen, daß bei einem Einschieben des Mehrkantzapfens 240 in das Rohr 220 die Mitnehmer 262 an dem inneren, dem Mehrkantzapfen 222 zugewandten Ende der Langlöcher 260 bereits anliegen, bevor der Verschlußkörper 244 unmittelbar vor der Öffnung 258 sitzt. Eine weitere Verschiebung des Mehrkantzapfens 240 in Richtung des Rohrs 220 hat dabei eine Verschiebung des ganzen Rohrs 220 in Richtung des Halters 26 zur Folge, so daß in der nicht bedienbaren Stellung des Handbedienelements 246, in welcher dieses durch das Schloß 248 am Halter 24 festlegbar ist, das Rohr 220 gegen die Kraft der Feder 226 wirkt und den Mehrkantzapfen 222 so weit verschiebt, bis der Feststellzapfen 224 in die Feststellausnehmung 230 eingreift und somit auch den Schwenkbügel 232 und damit den Verschlußkörper 236 relativ zur Öffnung 238 der T-Nut festlegt.

Damit ist in der nicht bedienbaren Stellung des Handbedienelements 246 sowohl der Verschlußkörper 244 unmittelbar vor der Öffnung 258 der T-Nut 198 positioniert und gesichert als auch der Verschlußkörper 236 in seiner Stellung unmittelbar vor der Öffnung 238 der T-Nut 198 gesichert. Erst dann, wenn ein Lösen des Handbedienhebels 246 vom Halter 24 durch Öffnen des Schlosses 248 erfolgt, hat das Rohr 220 die Möglichkeit, sich soweit in Richtung der Hülse 210 zu bewegen, daß der Feststellzapfen 224 in den Durchbruch 228 eintauchen und den Schwenkbügel 232 dadurch freigeben kann, daß er die Feststellausnehmung 230 verläßt. Damit ist der Schwenkbügel 232 mit dem daran angeordneten Verschlußkörper 236 in einer zur Drehachse 176 senkrechten Ebene E von der Öffnung verschwenkbar und somit von der Öffnung 238 der T-Nut 198 weg bewegbar.

Ferner bewegt sich der Verschlußkörper 244 von der der Öffnung 238 gegenüberliegenden Öffnung 258 der T-Nut 198 dadurch weg, daß er sich ausschließlich in Richtung der Drehachse 176 beim Überführen des Handbedienhebels 246 von der unbedienbaren Stellung in die bedienbare Stellung bewegt.

## Patentansprüche

1. Dachlastenträgersystem für Kraftfahrzeuge, umfassend einen Dachträger (16) mit einem, Lasten aufnehmenden Querträger (18) und mit beidseitig des Querträgers (18) angeordneten Haltern, welche Halterfüße (28) mit an diesen angeordneten Fixiereinrichtungen (140) aufweisen, wobei die Halterfüße (28) in fahrzeugseitig angeordnete Aufnahmen (12) einsetzbar in Längsrichtung (54) der Aufnahmen (12) bewegbar und in diesen Aufnahmen (12) mit den Fixiereinrichtungen (140) fixierbar sind, ein auf einer Seite des Dachträgers (16) angeordnetes Handbedienelement (246), und eine Koppeleinrichtung (170), welche das Handbedienelement (246) mit den Fixiereinrichtungen (140) so koppelt, daß über das Handbedienelement (246) die Fixiereinrichtungen (140) an beiden Halterfüßen (28) betätigbar sind, **dadurch gekennzeichnet, daß** an den Halterfüßen (28) derart federnd abgestützte Laufrollen (84, 86) gelagert sind, daß sich die Halterfüße (28) bei außerhalb einer Fixierstellung stehenden Fixiereinrichtungen (140) über die Laufrollen (84, 86) auf einer Auflagefläche (36) der Aufnahmen (12) abstützen und daß die Halterfüße (28) in der Fixierstellung der Fixiereinrichtungen (140) gegenüber den Laufrollen (84, 86) zur Auflagefläche (36) hin verschoben sind.

2. Dachlastenträgersystem nach Anspruch 1, **dadurch gekennzeichnet, daß** der jeweilige Halterfuß (28) in der jeweiligen Aufnahme (12) gegen eine Verschiebung in Längsrichtung (54) der Aufnahme (12) formschlüssig fixierbar ist.

3. Dachlastenträgersystem nach Anspruch 2, **dadurch gekennzeichnet, daß** der Halterfuß (28) und die Aufnahme (12) Formschlußelemente (114, 116; 126, 128) aufweisen, die durch Überführen der Fixiereinrichtung (140) in die Fixierstellung in Eingriff bringbar sind.

4. Dachlastenträgersystem nach Anspruch 3, **dadurch gekennzeichnet, daß** die Formschlußelemente (114, 116; 126, 128) in Richtung ihrer außer Eingriff stehenden Stellung federbeaufschlagt sind.

5. Dachlastenträgersystem nach Anspruch 4, **dadurch gekennzeichnet, daß** beim Überführen der Fixiereinrichtung (140) von der Lösestellung in die Fixierstellung die Fixiereinrichtung (140) der Federbeaufschlagung der Formschlußelemente (114, 116; 126, 128) entgegenwirkt.

6. Dachlastenträgersystem nach Anspruch 4 oder 5, **dadurch gekennzeichnet, daß** die Federbeaufschlagung der Formschlußelemente (114, 116; 126, 128) durch die federnd abgestützten Laufrollen (84, 86) erfolgt.

7. Dachlastenträgersystem nach einem der Ansprüche 3 bis 6, **dadurch gekennzeichnet, daß** das am Halterfuß (28) angeordnete Formschlußelement (114, 116) starr mit diesem verbunden ist und daß der Halterfuß (28) gegenüber der Aufnahme (12) durch ein federbeaufschlagtes an der Aufnahme (12) anliegendes und in dieser verschiebbares Element (84, 86) so beaufschlagt ist, daß das am Halterfuß (28) angeordnete Formschlußelement (114, 116) und das an der Aufnahme (12) angeordnete Formschlußelement (126, 128) außer Eingriff stehen.

8. Dachlastenträgersystem nach einem der Ansprüche 3 bis 7, **dadurch gekennzeichnet, daß** die Formschlußelemente (114, 116; 126, 128) durch Beaufschlagen des Halterfußes (28) in Abstützrichtung (124) auf eine Auflagefläche (36) der Aufnahme (12) zu in Eingriff bringbar sind.

9. Dachlastenträgersystem nach einem der Ansprüche 2 bis 8, **dadurch gekennzeichnet, daß** der jeweilige Halterfuß (28) in der entsprechenden Aufnahme (12) vor Ineingriffbringen der Formschlußelemente (114, 116; 126, 128) vorpositionierbar ist.

10. Dachlastenträgersystem nach Anspruch 9, **dadurch gekennzeichnet, daß** die in der Aufnahme (12) verschiebbaren Elemente (84, 86) in der Aufnahme (12) an definierten Stellen durch ein leichtes Einrasten vorpositionierbar sind.

11. Dachlastenträgersystem nach Anspruch 9 oder 10, **dadurch gekennzeichnet, daß** die Aufnahme (12) mit Vertiefungen (120, 122) versehen ist, in welche die Elemente (84, 86) zum Vorpositionieren des jeweiligen Halterfußes (28) relativ zur Aufnahme (12) eingreifen.

12. Dachlastenträgersystem nach einem der voranstehenden Ansprüche, **dadurch gekennzeichnet, daß** sich die Aufnahmen (12) in Fahrtrichtung erstrecken und die Halterfüße (28) in den Aufnahmen (12) in Fahrtrichtung verschiebbar sind.

13. Dachlastenträgersystem nach Anspruch 12, **dadurch gekennzeichnet, daß** die Halterfüße (28) mit Laufrollen (84, 86) in Aufnahmen (12) abgestützt sind.

14. Dachlastenträgersystem nach Anspruch 12 oder 13, **dadurch gekennzeichnet, daß** der Halterfüße (28) mit Querführungsrollen (68, 70) in den Aufnahmen (12) geführt sind.

15. Dachlastenträgersystem nach einem der voranstehenden Ansprüche, **dadurch gekennzeichnet, daß** die Fixiereinrichtungen (140) in eine Verschiebestellung überführbar sind, in welcher der Dachträger (16) in Längsrichtung (54) der Aufnahmen (12) bei in den Aufnahmen (12) gegen ein Herausheben gesicherten Halterfüßen (28) verschiebbar ist.

16. Dachlastenträgersystem nach einem der voranstehenden Ansprüche, **dadurch gekennzeichnet, daß** die Fixiereinrichtungen (140) in eine Lösestellung bringbar sind, in welcher die Halterfüße (28) in die Aufnahmen (12) einführbar oder aus diesen herausnehmbar sind.

17. Dachlastenträgersystem nach einem der voranstehenden Ansprüche, **dadurch gekennzeichnet, daß** jede Fixiereinrichtung (140) ein Fixierelement (156) aufweist, welches mit einem an der Aufnahme (12) vorgesehenen Gegenlager (50) durch eine Bewegung längs einer zum Gegenlager (50) verlaufenden Bahn in Eingriff bringbar ist.

18. Dachlastenträgersystem nach Anspruch 17, **dadurch gekennzeichnet, daß** das Fixierelement (156) längs einer gekrümmten Bahn bewegbar ist.

19. Dachlastenträgersystem nach Anspruch 18, **dadurch gekennzeichnet, daß** das Fixierelement (156) um eine Achse schwenkbar ist.

20. Dachlastenträgersystem nach einem der voranstehenden Ansprüche, **dadurch gekennzeichnet, daß** das Fixierelement eine Nase (156) aufweist und so bewegbar ist, daß die Nase (156) zwischen einer das Gegenlager (50) nicht hintergreifenden Lösestellung und einer das Gegenlager (50) hintergreifenden Fixierstellung bewegbar ist.

21. Dachlastenträgersystem nach einem der voranstehenden Ansprüche, **dadurch gekennzeichnet, daß** die Fixiereinrichtung als Schwenkkralle (140) ausgebildet ist.

22. Dachlastenträgersystem nach einem der voranstehenden Ansprüche, **dadurch gekennzeichnet, daß** die Aufnahme (12) als im Querschnitt C-förmige in Fahrzeuglängsrichtung verlaufende Aufnahmeschiene (32) mit einem Auflageschenkel (34), einem Seitenschenkel (38) und einem oberen Querschenkel (50) ausgebildet ist, auf deren Auflageschenkel (34) der Halterfuß (28) aufsetzbar ist und deren oberer Querschenkel (50) das Gegenlager bildet.

23. Dachlastenträgersystem nach Anspruch 22, **dadurch gekennzeichnet, daß** die Aufnahme (12) als doppelt-C-förmige Aufnahmeschiene (32) mit dem Auflageschenkel (34), zwei Seitenschenkeln (38, 40) und zwei oberen Querschenkeln (50, 52) ausgebildet ist und eine T-Nut bildet, in welche der jeweilige Halterfuß (28) einsetzbar ist.

24. Dachlastenträgersystem nach Anspruch 23, **dadurch gekennzeichnet, daß** der jeweilige Halterfuß (28) bei in Lösestellung stehendem Fixierelement (156) durch eine sich zwischen den Querschenkeln (50, 52) über die Länge derselben erstreckende Aufnahmeöffnung (46) der T-Nut in diese einsetzbar ist und daß das Fixierelement (156) bei in die T-Nut eingesetztem Halterfuß (28) in die Fixierstellung bringbar ist.

25. Dachlastenträgersystem nach einem der voranstehenden Ansprüche, **dadurch gekennzeichnet, daß** die Koppeleinrichtung als die Fixiereinrichtung (140) sowohl in Rich-tung der Lösestellung als auch der Fixierstellung beauf-schlagendes Koppelgestänge (170) ausgebildet ist.

26. Dachlastenträgersystem nach Anspruch 25, **dadurch gekennzeichnet, daß** das Koppelgestänge (170) eine längs des Querträgers (18) verlaufende Koppelwelle (190) und beidseitig derselben angeordnete Antriebselemente (174) für die Fixiereinrichtungen (140) aufweist.

27. Dachlastenträgersystem nach Anspruch 26, **dadurch gekennzeichnet, daß** die Antriebselemente (174) über Verbindungsgestänge (172) auf die Fixiereinrichtungen (140) wirken.

28. Dachlastenträgersystem nach Anspruch 27, **dadurch gekennzeichnet, daß** die Antriebselemente Getriebeelemente (174) für die Betätigung der Verbindungsgestänge (172) umfassen.

29. Dachlastenträgersystem nach Anspruch 27 oder 28, **dadurch gekennzeichnet, daß** die Getriebeelemente (174) als Kulissengetriebe ausgebildet sind.

30. Dachlastenträgersystem nach einem der Ansprüche 26 bis 29, **dadurch gekennzeichnet, daß** das Handbedienelement (246) auf zumindest einer Seite der Koppelwelle (190) angeordnet ist.

31. Dachlastenträgersystem nach einem der voranstehenden Ansprüche, **dadurch gekennzeichnet, daß** das Handbedienelement als Hebel (246) ausgebildet ist.

32. Dachlastenträgersystem nach einem der voranstehenden Ansprüche, **dadurch gekennzeichnet, daß** das Handbedienelement (246) in der Fixierstellung der Fixiereinrichtungen (140) gegenüber dem nahe des Handbedienelements (246) angeordneten Halter (24) festlegbar ist.

33. Dachlastenträgersystem nach Anspruch 32, **dadurch gekennzeichnet, daß** das Handbedienelement (246) mit einem Schloß (248) gegenüber dem Halter (24) fixierbar ist.

34. Dachlastenträgersystem nach Anspruch 32 oder 33, **dadurch gekennzeichnet, daß** das Handbedienelement (246) zwischen einer unbedienbaren Stellung, in welcher es am Halter (24) fixierbar ist, und einer bedienbaren Stellung, in welcher es nicht am Halter (24) fixierbar ist, bewegbar ist.

35. Dachlastenträgersystem nach Anspruch 34, **dadurch gekennzeichnet, daß** das Handbedienelement (246) zum Bewegen von der unbedienbaren Stellung in die bedienbare Stellung in Richtung seiner Drehachse (176) bewegbar ist.

36. Dachlastenträgersystem nach einem der voranstehenden Ansprüche, **dadurch gekennzeichnet, daß** der Querträger (18) mit einer Querführungsut (198) versehen ist.

37. Dachlastenträgersystem nach Anspruch 36, **dadurch gekennzeichnet, daß** die Querführungsnut (198) äußere Einführöffnungen (238, 258) für Nutensteine aufweist.

38. Dachlastenträgersystem nach Anspruch 37, **dadurch gekennzeichnet, daß** die äußeren Einführöffnungen (238, 258) durch Verschlußelemente (236, 244) verschließbar sind.

39. Dachlastenträgersystem nach Anspruch 38, **dadurch gekennzeichnet, daß** die Verschlußelemente (236, 244) dann in ihrer die äußeren Einführöffnungen (238, 258) verschließenden Stellung gesichert sind, wenn das Handbedienelement (246) in der Fixierstellung der Fixiereinrichtungen (140) steht und an dem Halter (24) gesichert ist.

40. Dachlastenträgersystem nach Anspruch 39, **dadurch gekennzeichnet, daß** die Verschlußelemente (236, 244) durch die Koppeleinrichtung (170) sicherbar sind.

41. Dachlastenträgersystem nach Anspruch 39 oder 40, **dadurch gekennzeichnet, daß** das auf seiten des Handbedienelements (246) angeordnete Verschlußelement (244) fest mit dem Handbedienelement (246) verbunden ist und in der unbedienbaren Stellung des Handbedienelements (246) in seiner die entsprechende Einführöffnung (258) verschließenden Stellung steht und in der bedienbaren Stellung des Handbedienelements (246) in seiner die Einführöffnung (258) freigebenden Stellung steht.

42. Dachlastenträgersystem nach einem der Ansprüche 39 bis 41, **dadurch gekennzeichnet, daß** zur Sicherung des Verschlußelements (236) auf einer dem Handbedienelement (246) gegenüberliegenden Seite des Querträgers (18) dieses Verschlußelement (236) mittels eines Schwenkbügels (232) schwenkbar am Halter (26) gehalten ist und von einer die entsprechende äußere Einführöffnung (238) verschließenden Stellung in eine die Einführöffnung (238) freigebende Stellung verschwenkbar ist.

43. Dachlastenträgersystem nach Anspruch 42, **dadurch gekennzeichnet, daß** der Schwenkbügel (232) durch Bewegen des Handbedienelements (246) von der bedienbaren Stellung in die unbedienbare Stellung sicherbar ist.

44. Dachlastenträgersystem nach Anspruch 43, **dadurch gekennzeichnet, daß** die Koppelwelle (190) endseitig ein Feststellelement (224) aufweist, mit welchem der Schwenkbügel (232) in der Stellung, in welcher das Verschlußelement (236) die äußere Einführöffnung (238) verschließt, festlegbar ist.

## Claims

1. Roof load carrier system for motor vehicles, comprising a roof rack (16) with a cross member (18) receiving loads and holders arranged on both sides of the cross member (18) and having holder feet (28) with fixing devices (140) arranged thereon, the holder feet (28) being insertable into receiving means (12) arranged on the vehicle, movable in the longitudinal direction (54) of the receiving means (12) and fixable in these receiving means (12) with the fixing devices (140), a hand-operated element (246) arranged on one side of the roof rack (16), and a coupling device (170) for coupling the hand-operated element (246) with the fixing devices (140) such that the fixing devices (140) on both holder feet (28) are actuatable via the hand-operated element (246), **characterized in that** rollers (84, 86) are mounted on the holder feet (28) and are supported in such a resilient manner that when the fixing devices (140) are out of a fixing position, the holder feet (28) are supported via the rollers (84, 86) on a contact surface (36) of the receiving means (12), and **in that** when the fixing devices (140) are in the fixing position, the holder feet (28) are displaced towards the contact surface (36) relative to the rollers (84, 86).

2. Roof load carrier system as defined in claim 1, **characterized in that** the respective holder foot (28) is fixable in a positively locked manner in the respective receiving means (12) against any displacement in the longitudinal direction (54) of the receiving means (12).

3. Roof load carrier system as defined in claim 2, **characterized in that** the holder foot (28) and the receiving means (12) have positive-locking elements (114, 116; 126, 128) which can be brought into engagement by transfer of the fixing device (140) into the fixing position.

4. Roof load carrier system as defined in claim 3, **characterized in that** the positive-locking elements (114, 116; 126, 128) are spring biased in the direction of their disengaged position.

5. Roof load carrier system as defined in claim 4, **characterized in that** during transfer of the fixing device (140) from the release position into the fixing position, the fixing device (140) counteracts the spring bias on the positive-locking elements (114, 116; 126, 128).

6. Roof load carrier system as defined in claim 4 or 5, **characterized in that** the spring bias on the positive-locking elements (114, 116; 126, 128) is brought about by the resiliently supported rollers (84, 86).

7. Roof load carrier system as defined in any one of claims 3 to 6, **characterized in that** the positive-locking element (114, 116) arranged on the holder foot (28) is rigidly connected thereto, and **in that** the holder foot (28) is acted upon in relation to the receiving means (12) by a spring biased element (84, 86) abutting on the receiving means (12) and displaceable therein such that the positive-locking element (114, 116) arranged on the holder foot (28) and the positive-locking element (126, 128) arranged on the receiving means (12) are in disengagement.

8. Roof load carrier system as defined in any one of claims 3 to 7, **characterized in that** the positive-locking elements (114, 116; 126, 128) can be brought into engagement by acting upon the holder foot (28) in the support direction (124) towards a contact surface (36) of the receiving means (12).

9. Roof load carrier system as defined in any one of claims 2 to 8, **characterized in that** the respective holder foot (28) is preliminarily positionable in the corresponding receiving means (12) prior to engagement of the positive-locking elements (114, 116; 126, 128) in one another.

10. Roof load carrier system as defined in claim 9, **characterized in that** the elements (84, 86) displaceable in the receiving means (12) are preliminarily positionable in the receiving means (12) in a defined position by a slight locking.

11. Roof load carrier system as defined in claim 9 or 10, **characterized in that** the receiving means (12) is provided with recesses (120, 122) in which the elements (84, 86) engage for the preliminary positioning of the respective holder foot (28) relative to the receiving means (12).

12. Roof load carrier system as defined in any one of the preceding claims, **characterized in that** the receiving means (12) extend in the direction of travel and the holder feet (28) are displaceable in the receiving means (12) in the direction of travel.

13. Roof load carrier system as defined in claim 12, **characterized in that** the holder feet (28) are supported in the receiving means (12) with rollers (84, 86).

14. Roof load carrier system as defined in claim 12 or 13, **characterized in that** the holder feet (28) are guided in the receiving means (12) with transverse guide rollers (68, 70).

15. Roof load carrier system as defined in any one of the preceding claims, **characterized in that** the fixing devices (140) can be transferred into a displacement position in which the roof rack (16) is displaceable in the longitudinal direction (54) of the receiving means (12) with the holder feet (28) secured against lifting out of the receiving means (12).

16. Roof load carrier system as defined in any one of the preceding claims, **characterized in that** the fixing devices (140) can be brought into a release position in which the holder feet (28) are insertable into or removable from the receiving means (12).

17. Roof load carrier system as defined in any one of the preceding claims, **characterized in that** each fixing device (140) has a fixing element (156) which can be brought into engagement with an abutment (50) provided on the receiving means (12) by movement along a path extending to the abutment (50).

18. Roof load carrier system as defined in claim 17, **characterized in that** the fixing element (156) is movable along a curved path.

19. Roof load carrier system as defined in claim 18, **characterized in that** the fixing element (156) is pivotable about an axis.

20. Roof load carrier system as defined in any one of the preceding claims, **characterized in that** the fixing element has a nose (156) and is movable such that the nose (156) is movable between a release position not engaging the abutment (50) and a fixing position engaging the abutment (50).

21. Roof load carrier system as defined in any one of the preceding claims, **characterized in that** the fixing device is designed as a swivel claw (140).

22. Roof load carrier system as defined in any one of the preceding claims, **characterized in that** the receiving means (12) is designed as a receiving rail (32) of C-shaped cross section extending in the longitudinal direction of the vehicle and having a contact arm (34), a side arm (38) and an upper transverse arm (50), the holder foot (28) being positionable on the contact arm (34) thereof and the upper transverse arm (50) thereof forming the abutment.

23. Roof load carrier system as defined in claim 22, **characterized in that** the receiving means (12) is designed as a double C-shaped receiving rail (32) with the contact arm (34), two side arms (38, 40) and two upper transverse arms (50, 52) and forms a T-shaped groove into which the respective holder foot (28) is insertable.

24. Roof load carrier system as defined in claim 23, **characterized in that** with the fixing element (156) in release position the respective holder foot (28) is insertable into the T-shaped groove through an opening (46) therein extending between the transverse arms (50, 52) over the length thereof, and **in that** the fixing element (156) can be brought into the fixing position when the holder foot (28) is inserted in the T-shaped groove.

25. Roof load carrier system as defined in any one of the preceding claims, **characterized in that** the coupling device is designed as a coupling rod assembly (170) acting on the fixing device (140) in the direction of both the release position and the fixing position.

26. Roof load carrier system as defined in claim 25, **characterized in that** the coupling rod assembly (170) has a coupling shaft (190) extending along the cross member (18) and drive elements (174) for the fixing devices (140) arranged on both sides of the coupling shaft (190).

27. Roof load carrier system as defined in claim 26, **characterized in that** the drive elements (174) act on the fixing devices (140) via connecting rod assemblies (172).

28. Roof load carrier system as defined in claim 27, **characterized in that** the drive elements comprise gear elements (174) for actuating the connecting rod assemblies (172).

29. Roof load carrier system as defined in claim 27 or 28, **characterized in that** the gear elements (174) are designed as connecting link gears.

30. Roof load carrier system as defined in any one of claims 26 to 29, **characterized in that** the hand-operated element (246) is arranged on at least one side of the coupling shaft (190).

31. Roof load carrier system as defined in any one of the preceding claims, **characterized in that** the hand-operated element is designed as a lever (246).

32. Roof load carrier system as defined in any one of the preceding claims, **characterized in that** in the fixing position of the fixing devices (140) the hand-operated element (246) is securable in relation to the holder (24) arranged close to the hand-operated element (246).

33. Roof load carrier system as defined in claim 32, **characterized in that** the hand-operated element (246) is fixable with a lock (248) in relation to the holder (24).

34. Roof load carrier system as defined in claim 32 or 33, **characterized in that** the hand-operated element (246) is movable between a non-operable position where it is fixable on the holder (24) and an operable position where it is not fixable on the holder (24).

35. Roof load carrier system as defined in claim 34, **characterized in that** the hand-operated element (246) is movable in the direction of its axis of rotation (176) for movement from the non-operable position into the operable position.

36. Roof load carrier system as defined in any one of the preceding claims,
**characterized in that** the cross member (18) is provided with a transverse guide groove (198).

37. Roof load carrier system as defined in claim 36, **characterized in that** the transverse guide groove (198) has outer insertion openings (238, 258) for groove blocks.

38. Roof load carrier system as defined in claim 37, **characterized in that** the outer insertion openings (238, 258) are closable by closure elements (236, 244).

39. Roof load carrier system as defined in claim 38, **characterized in that** the closure elements (236, 244) are secured in their position closing the outer insertion openings (238, 258) when the hand-operated element (246) is in the fixing position of the fixing devices (140) and is secured on the holder (24).

40. Roof load carrier system as defined in claim 39, **characterized in that** the closure elements (236, 244) are securable by means of the coupling device (170).

41. Roof load carrier system as defined in claim 39 or 40, **characterized in that** the closure element (244) arranged on the side of the hand-operated element (246) is securely connected to the hand-operated element (246) and in the non-operable position of the hand-operated element (246) is in its position closing the corresponding insertion opening (258) and in the operable position of the hand-operated element (246) is in its position releasing the insertion opening (258).

42. Roof load carrier system as defined in any one of claims 39 to 41, **characterized in that** for securing the closure element (236) on a side of the cross member (18) located opposite the hand-operated element (246), this closure element (236) is held on the holder (26) so as to be pivotable by means of a swivel bracket (232) and is pivotable from a position closing the corresponding outer insertion opening (238) into a position releasing the insertion opening (238).

43. Roof load carrier system as defined in claim 42, **characterized in that** the swivel bracket (232) is securable by movement of the hand-operated element (246) from the operable position into the non-operable position.

44. Roof load carrier system as defined in claim 43, **characterized in that** the coupling shaft (190) has at its end an adjusting element (224) for securing the swivel bracket (232) in the position where the closure element (236) closes the outer insertion opening (238).

## Revendications

1. Système de porte-bagages de toit pour véhicules automobiles, comprenant un support de toit (16) comportant un support transversal (18) supportant des charges et des dispositifs de retenue disposés des deux côtés du support transversal (18) et qui comportent des pieds (28), qui portent des dispositifs de fixation (140), les pieds (28) des dispositifs de retenue pouvant être insérés dans des logements (12) prévus sur le véhicule et étant déplaçables dans la direction longitudinale (54) des logements (12) et pouvant être fixés dans ces logements (12) au moyen des dispositifs de fixation (140), un élément d'actionnement manuel (246) disposé d'un côté du porte-bagages de toit (16) et un dispositif de couplage (170), qui accouple l'élé-ment d'acheminement manuel (246) aux dispositifs de fixation (140) de telle sorte que les dispositifs de fixation (140) peuvent être actionnés sur les deux pieds (28) des dispositifs de retenue par l'intermédiaire de l'élément d'actionnement manuel (246), **caractérisé en ce que** sur les pieds (28) des dispositifs de retenue sont montés des galets de roulement (84,86), qui prennent appui élastiquement de telle sorte que dans le cas où les dispositifs de fixation (140) sont situés en dehors d'une position de fixation, les pieds (28) des dispositifs de retenue prennent appui au moyen des galets de roulement (84,86) sur une surface d'appui (36) des logements (12) et que, lorsque les dispositifs de fixation (140) sont dans la position de fixation, les pieds (28) des dispositifs de retenue sont déplacés par rapport aux galets de roulement (84,86) en direction de la surface d'appui (36).

2. Système de porte-bagages de toit selon la revendication 1, **caractérisé en ce que** le pied respectif (28) du dispositif de retenue peut être fixé selon une liaison par formes complémentaires dans le logement respectif (12) à l'encontre d'un déplacement dans la direction longitudinale (54) du logement (12).

3. Système de porte-bagages de toit selon la revendication 2, **caractérisé en ce que** le pied (28) du dispositif de retenue et le logement (12) comportent des éléments de liaison par formes complémentaires (114,116; 126,128), qui peuvent être amenés en prise sous l'effet de la venue du dispositif de fixation (140) dans la position de fixation.

4. Système de porte-bagages de toit selon la revendication 3, **caractérisé en ce que** les éléments de liaison par formes complémentaires (114,116;126,128) sont chargés par un ressort en direction de leur position hors de prise.

5. Système de porte-bagages de toit selon la revendication 4, **caractérisé en ce que** lorsque le dispositif de fixation (140) passe de la position de libération dans la position de fixation, le dispositif de fixation (140) agit à l'encontre de la charge du ressort des éléments de liaison par formes complémentaires (114,116;126, 128).

6. Système de porte-bagages de toit selon la revendication 4 ou 5, **caractérisé en ce que** la charge, produite par ressort, des éléments de liaison par formes complémentaires (114,116; 126,128) s'effectue à l'aide des galets de roulement supportés élastiquement (84,86).

7. Système de porte-bagages de toit selon l'une des revendications 3 à 6, **caractérisé en ce que** l'élément de liaison par formes complémentaires (114,116), qui est disposé sur le pied (28) du dispositif de retenue, est relié rigidement à ce pied et que le pied (28) du dispositif de retenue est chargé par rapport au logement (12), par un élément (84,86), qui est chargé par un ressort, s'applique dans le logement (12) et est déplaçable dans ce dernier, de telle sorte que l'élément de liaison par formes complémentaires (114,116), qui est disposé sur le pied (28) du dispositif de retenue, et l'élément de liaison par formes complémentaires (126,128), qui est disposé dans le logement (12), sont hors de prise.

8. Système de porte-bagages de toit selon l'une des revendications 3 à 7, **caractérisé en ce que** les éléments de liaison par formes complémentaires (114,116; 126,128) peuvent être amenés en prise par chargement du pied (28) du dispositif de retenue dans la direction d'appui (124) sur une surface d'appui (36) du logement (12).

9. Système de porte-bagages de toit selon l'une des revendications 2 à 8, **caractérisé en ce que** le pied respectif (28) du dispositif de retenue peut être prépositionné dans le logement correspondant (12) avant la venue en prise des éléments de liaison par formes complémentaires (114,116; 126,128).

10. Système de porte-bagages de toit selon la revendication 9, **caractérisé en ce que** les éléments (84,86) déplaçables dans le logement (12) peuvent être prépositionnés dans le logement (12) dans des positions définie, au moyen d'un simple encliquetage.

11. Système de porte-bagages de toit selon la revendication 9 ou 10, **caractérisé en ce que** le logement (12) est pourvu de renfoncements (120,122), dans lesquels les éléments (84,86) s'engagent pour le prépositionnement du pied respectif (28) du dispositif de retenue par rapport au logement (12).

12. Système de porte-bagages de toit selon l'une des revendications précédentes, **caractérisé en ce que** les logements (12) s'étendent dans la direction du sens de la marche et les pieds (28) du dispositif de retenue peuvent être déplacés dans la direction du sens de la marche dans les logements (12).

13. Système de porte-bagages de toit selon la revendication 12, **caractérisé en ce que** les pieds (28) des dispositifs de retenue prennent appui au moyen de galets de roulement (84,86) dans les logements (12).

14. Système de porte-bagages de toit selon la revendication 12 ou 13, **caractérisé en ce que** les pieds (28) des dispositifs de retenue sont guidés par des galets de guidage transversal (68,70) dans le logement (12).

15. Système de porte-bagages de toit selon l'une des revendications précédentes, **caractérisé en ce que** les dispositifs de fixation (50) peuvent être transférés dans une position de déplacement, dans laquelle le porte-bagage de toit (16) est déplaçable dans la direction longitudinale (54) des logements (12) lorsque les pieds (28) des dispositifs de retenue sont bloqués contre tout dégagement dans les logements (12).

16. Système de porte-bagages de toit selon l'une des revendications précédentes, **caractérisé en ce que** les dispositifs de fixation (140) peuvent être amenés dans une position de libération, dans laquelle les pieds (28) des dispositifs de retenue peuvent être insérés dans les logements (12) ou peuvent en être retirés.

17. Système de porte-bagages de toit selon l'une des revendications précédentes, **caractérisé en ce que** chaque dispositif de fixation (140) comporte un élément de fixation (156), qui peut être amené en prise avec une butée antagoniste (50), qui est prévue dans le logement (12), au moyen d'un déplacement le long d'un trajet s'étendant jusqu'à la butée antagoniste (50).

18. Système de porte-bagages de toit selon la revendication 17, **caractérisé en ce que** l'élément de fixation (156) est déplaçable le long d'une trajectoire cintrée.

19. Système de porte-bagages de toit selon la revendication 18, **caractérisé en ce que** l'élément de fixation (158) peut pivoter autour d'un axe.

20. Système de porte-bagages de toit selon l'une des revendications précédentes, **caractérisé en ce que** l'élément de fixation comporte un bec (156) et est déplaçable de telle sorte que le bec (156) est déplaçable entre une position de libération sans engagement derrière la butée antagoniste (50) et une position de fixation avec engagement derrière la butée antagoniste (50).

21. Système de porte-bagages de toit selon l'une des revendications précédentes, **caractérisé en ce que** le dispositif de fixation est agencé sous la forme d'une griffe pivotante (140).

22. Système de porte-bagages de toit selon l'une des revendications précédentes, **caractérisé en ce que** le logement (12) est agencé sous la forme d'un rail de logement (32) en formé de C en coupe transversale, qui s'étend dans la direction longitudinale du véhicule et comporte une branche d'appui (34), une branche latérale (38) et une branche transversale supérieure (50), que le pied (28) du dispositif de retenue peut prendre appui sur la branche d'appui (34) du rail et que la branche transversale supérieure (50) du rail forme la butée antagoniste.

23. Système de porte-bagages de toit selon la revendication 22, **caractérisé en ce que** le logement (12) est agencé sous la forme d'un rail de logement (32) en forme de C double comportant la branche d'appui (34), deux branches latérales (38,40) et deux branches transversales supérieures (50,52) et forme une rainure en T, dans laquelle peut être inséré le pied respectif (28) du dispositif de retenue.

24. Système de porte-bagages de toit selon la revendication 23, **caractérisé en ce que** lorsque l'élément de fixation (156) est situé dans une position de libération, le pied respectif (28) du dispositif de retenue peut être inséré dans la rainure en T par l'intermédiaire d'une ouverture de réception (46) de cette dernière, qui s'étend entre les branches transversales (50,52) sur toute la longueur de ces branches, et que dans le cas où le pied (28) du dispositif de retenue est inséré dans la rainure en T, l'élément de fixation (156) peut être amené dans la position de fixation.

25. Système de porte-bagages de toit selon l'une des revendications précédentes, **caractérisé en ce que** le dispositif de couplage est agencé sous la forme d'une tringlerie de couplage (170) qui charge le dispositif de fixation (140) aussi bien en direction de la position de libération qu'en direction de la position de fixation.

26. Système de porte-bagages de toit selon la revendication 25, **caractérisé en ce que** la tringlerie de couplage (170) comporte un arbre de couplage (190), qui s'étend le long du support transversal (18), et des éléments d'entraînement (174) qui sont disposés des deux côtés de cet arbre et sont prévus pour les dispositifs de fixation (140).

27. Système de porte-bagages de toit selon la revendication 26, **caractérisé en ce que** les éléments d'entraînement (174) agissent au moyen de tringleries de liaison (172) sur les dispositifs de fixation (140).

28. Système de porte-bagages de toit selon la revendication 27, **caractérisé en ce que** les éléments d'entraînement comprennent des éléments de transmission (174) pour l'actionnement des tringleries de liaison (172).

29. Système de porte-bagages de toit selon la revendication 27 ou 28, **caractérisé en ce que** les éléments de transmission (174) sont agencés sous la forme d'un mécanisme de transmission à coulisse.

30. Système de porte-bagages de toit selon l'une des revendications 26 à 29, **caractérisé en ce que** l'élément d'actionnement manuel (246) est disposé sur au moins un côté de l'arbre de couplage (190).

31. Système de porte-bagages de toit selon l'une des revendications précédentes, **caractérisé en ce que** l'élément d'actionnement manuel est agencé sous la forme d'un levier (246).

32. Système de porte-bagages de toit selon l'une des revendications précédentes, **caractérisé en ce que** l'élément d'actionnement manuel (246) peut être fixé dans la position de fixation des dispositifs de fixation (140) par rapport au dispositif de retenue (24) disposé à proximité de l'élément d'actionnement manuel (246).

33. Système de porte-bagages de toit selon la revendication 32, **caractérisé en ce que** l'élément d'actionnement manuel (246) peut être fixé à un verrou (248) par rapport au dispositif de retenue (24).

34. Système de porte-bagages de toit selon la revendication 32 ou 33, **caractérisé en ce que** l'élément d'actionnement manuel (246) peut être fixé entre une position dans laquelle un actionnement n'est pas possible et dans laquelle cet élément peut être fixé sur le dispositif de retenue (24), et une position dans laquelle un actionnement est possible et dans laquelle l'élément est déplaçable sur le dispositif de retenue (24)

35. Système de porte-bagages de toit selon la revendication 34, **caractérisé en ce que** l'élément d'actionnement manuel (246) est déplaçable dans la direction de son axe de rotation (176) pour le déplacement depuis la position dans laquelle un actionnement n'est pas possible, dans la position dans laquelle un actionnement est possible.

36. Système de porte-bagages de toit selon l'une des revendications précédentes, **caractérisé en ce que** le support transversal (18) est équipé d'une rainure de guidage transversal (198).

37. Système de porte-bagages de toit selon la revendication 36, **caractérisé en ce que** la rainure de guidage transversal (198) comporte des ouvertures extérieures d'introduction (238,258) pour des coulisseaux de rainure.

38. Système de porte-bagages de toit selon la revendication 37, **caractérisé en ce que** les ouvertures extérieures d'introduction (238,258) peuvent être fermées par des éléments de fermeture (236,244).

39. Système de porte-bagages de toit selon la revendication 38, **caractérisé en ce que** les éléments de fermeture (236,234) peuvent être fixés dans leur position dans laquelle les ouvertures extérieures d'introduction (238,258) sont fermées, lorsque l'élément d'actionnement manuel (246) est situé dans la position de fixation des dispositifs de fixation (180) et est bloqué sur le dispositif de retenue (24).

40. Système de porte-bagages de toit selon la revendication 39, **caractérisé en ce que** les éléments de fermeture (236,244) peuvent être bloqués par le dispositif de couplage (170).

41. Système de porte-bagages de toit selon la revendication 39 ou 40, **caractérisé en ce que** l'élément de fermeture (244), qui est disposé sur des côtés de l'élément d'actionnement manuel (246), est relié de façon fixe à l'élément d'actionnement manuel (246) et, lorsque l'élément d'actionnement manuel (246) est dans la position dans laquelle il ne peut pas être actionné, l'élément de fermeture est situé dans sa position dans laquelle l'ouverture correspondante d'introduction (258) est fermée, et lorsque l'élément d'actionnement manuel (246) est dans la position dans laquelle il peut être actionné, l'élément de fermeture est dans sa position qui libère l'ouverture d'introduction (258).

42. Système de porte-bagages de toit selon l'une des revendications 39 à 41, **caractérisé en ce que** pour le blocage de l'élément de fermeture (236) sur un côté, situé à l'opposé de l'élément d'actionnement manuel (246) du support transversal (18), cet élément de fermeture (236) est retenu de manière à pouvoir pivoter sur le dispositif de retenue (26) au moyen d'un étrier pivotant (232) et peut pivoter depuis une position, dans laquelle l'ouverture extérieure correspondante d'entrée (238) est fermée, pour venir dans une position qui libère l'ouverture d'introduction (238).

43. Système de porte-bagages de toit selon la revendication 42, **caractérisé en ce que** l'étrier pivotant (232) peut être bloqué par déplacement de l'élément d'actionnement manuel (246) depuis la position dans laquelle un actionnement est possible, pour venir dans la position dans laquelle un actionnement est impossible.

44. Système de porte-bagages de toit selon la revendication 43, **caractérisé en ce que** l'arbre de couplage (190) comporte, à une extrémité, un élément de blocage (224), au moyen duquel l'étrier pivotant (232) peut être fixé dans la position dans laquelle l'élément de fermeture (236) ferme l'ouverture extérieure d'introduction (238).
